# EUROPEAN PATENT APPLICATION

(11) **EP 4 343 981 A1**
(43) Date of publication of application: **27.03.2024**
(21) Application number: 22306395.9
(22) Date of filing: 22.09.2022
(51) Int. Cl.: H01R 13/631, H01R 13/533, H01R 13/623, H01R 13/645, H01R 13/74, H01R 24/20, H01R 103/00

(54) **ELECTRICAL CONNECTOR**

(71) Applicant: Connecteurs Electriques Deutsch, 27000 Evreux (FR)
(72) Inventor: CASSAR, Thierry, Evreux (FR); DELAIRE, Simon, Evreux (FR); QUEVA, Sébastien, Evreux (FR); BRUNET, Martin, Evreux (FR); SOUFFLET, Samuel, Evreux (FR)
(74) Representative: Grünecker Patent- und Rechtsanwälte PartG mbB

(57) **Abstract**

The invention relates to an electrical connector (1) comprising at least two electrical contacts (13a, 13b) housed in an internal connector space (45) and configured to be mated with corresponding electrical contacts (113a, 113b) of a second connector (101), characterized in further comprising a lever (49) housed in the internal space (45) such that the mechanical contact between the housing (3) and the lever (49) establishes a fulcrum (51) of the lever (49), wherein the fulcrum (51) is positioned such that it is arranged between the at least two electrical contacts (113a, 113b), the lever (49) being furthermore arranged and configured such that a pivoting of the lever (49) moves the position of the at least two electrical contacts (113a, 113b) relatively to the housing (3). The invention further relates to a lug-free electrical connector assembly and a method of a lug-free connecting of connectors, wherein the abutment of all electrical contact pairs secured by a tilted arrangement of the first housing relatively to the mating second housing with respect to the mating axis.

## Description

The present invention relates to an electrical connector configured to be mated with a second connector, in particular an electrical connector for high-power vehicle applications.

When the contact surfaces of metallic electrical contacts are engaged, the surface asperities of the respective surfaces adhere. Relative sliding motions of the contact surfaces lead to the breakdown of the adhering surface asperities, which generates wear debris. The term fretting corrosion refers to the incidence and subsequent oxidation of such wear debris on the contact surfaces of metallic electrical contacts under mechanical load.

The occurrence of fretting corrosion increases contact resistance, which may disturb electrical signal transmission and notably induces electric power losses to heat. Fretting corrosion also degrades material properties of the corroded materials under stress, such as fatigue strength. For example, fretting corrosion may increase the risk of crack appearance.

Meanwhile, the industry-wide push towards electrification of mobility translates to electrical connectors being increasingly implemented in vehicle applications not only for signal transmission, but also for electric power transmission. For example, high power connectors may be required to safely and reliably transfer direct electrical current of 50A or higher.

At the same time, in many types of vehicles, in particular electric trains and aircraft, the dynamic environment may generate important vibrational loads on electric power transmission components. For example, continuous vibration oscillations are common in aircraft, with oscillation amplitudes ranging from the order of micrometres up to 10mm.

Vibrational movements are transmitted from the vibration source to the electrical connections, composed of an electrical connector mated with a second electrical connector, in particular a plug connector mated with a receptacle connector. Consequently, the portions of the respective connector housings that are bottomed out and secured with each other move in conjunction. The mated electrical contacts of the respective connectors, however, still move relatively to each other and to the housings in which they are fit, in particular in view of variations of contact dimensions within manufacturing tolerance, which leads to the appearance of fretting corrosion.

This vibration-induced fretting corrosion in electrical connectors leads to the unwanted increase in ohmic contact resistance and the unwanted energy loss as heat.

For this reason, to this day, high power electrical connections are secured using high voltage compression lug connections. Lug connections typically include uninsulated exposed parts, which when under high voltage represent a safety risk to humans on one hand, as well as on the other hand a risk to the vehicle through electromagnetic radiation. In particular, the lack of insulation of the exposed parts limits the electric power to be transferred in accordance with the dielectric resistance of the surrounding gases, which can fluctuate with ambient humidity levels. As the lugs are only insulated by air gaps to the next lug and the metallic structure of the aircraft, they must be dimensioned to a relatively low voltage usage.

Furthermore, the installation of lug connections can be time-consuming and laborious. Dedicated tools are required for a deep cable stamping as well as for the initial connection fastening. A sequence of markings is often required to indicate completed installation steps. The heavy metallic high-power cables and lugs are cumbersome to manipulate, especially as it is usual for additional loops of excess cable to be allotted in anticipation of lug connection reparations that may be required. Incidentally, these additional cable loops add to the total mass of the vehicle and therefore reduce energy efficiency.

Moreover, as thermal expansion, vibrations and compression stress all wear on the lug connection, frequent refastening may be necessary to continue safe operation of the connection. Therefore, the requirements on preventative maintenance, including fastening checks and retightening, represent a cost factor on vehicle operation.

In view of the above, it is an object of the present invention to provide an improved high-power connector for dynamic environments.

This object is achieved with an electrical connector, in particular an electrical connector for high-power vehicle applications, configured to be mated with a second connector in a mating direction parallel to along a mating axis, comprising a housing defining an internal connector space and configured to be mated with a mating housing of the second connector, and at least two electrical contacts housed in the internal space of the housing and configured to be mated with corresponding electrical contacts of the second connector.

The electrical connector is characterized in further comprising a lever housed in the internal space of the housing such that the mechanical contact between the housing and the lever establishes a fulcrum of the lever, wherein the fulcrum is positioned such that it is arranged between the at least two electrical contacts, the lever being furthermore arranged and configured such that a pivoting of the lever moves the position of the at least two electrical contacts relatively to the housing.

When an electrical connector according to the invention is mated with a mating second connector, the lever can move the position of the electrical contacts relatively to the housing to compensate for the diverging lengths of contacts that occur within the limits of manufacturing tolerances. For example, manufacturing tolerance limits may allow for deviations of -0.5mm and +0.5mm of nominal length. In particular, when a first electrical contact is bottomed out with its respective mating electrical contact of the second connector, the translational movement of connector housings during connector mating exerts a force on the lever through the first bottomed-out contact. In turn, the lever pivots around the fulcrum, thus adjusting the relative position of further electrical contacts around the fulcrum until the further electrical contacts are also bottomed out.

The electrical connector according to the invention is more resistant to fretting corrosion when mated with a mating connector, even in vibrationally intensive environments, as the relative movement between mating electrical contacts, being the source of fretting, can be reduced or even eliminated, without the need of lugs. This allows for faster and simpler installation and maintenance, and a greater power performance due to lighter vehicles, higher voltages, and better electromagnetic compatibility. For example, the first connector can be a receptacle connector and the second connector can be a plug connector, or vice-versa, in particular a plug connector and a receptacle connector as used in aerospace environments. This allows the invention to be applied to high-voltage, high-vibration aerospace environments particularly prone to fretting corrosion occurrence.

The electrical connector can further be improved according to various advantageous aspects, which can be independent of one another in regards to their respective technical effects, and which can be combined arbitrarily.

In one aspect of the invention, the housing may further comprise a shell and a pusher element, the pusher element being disposed in the internal space and rigidly attached, in particular form fit, to the shell of the housing, wherein the pusher element realises the mechanical contact between the housing and the lever at the fulcrum. When the housing shell is manually actuated to operate the mating and coupling of the electrical connector with the mating second connector, the movement of the shell can be transferred directly from the pusher onto the lever through the fulcrum.

In one aspect of the invention, the lever can be configured such that a pivoting of the lever moves the position of the at least two electrical contacts relatively to the housing translationally along the mating axis. In this configuration, the control of the movement of the electrical contacts to compensate diverging lengths can be improved and the fretting corrosion reduced.

In one aspect of the invention, the lever can comprise a protrusion, in particular a hemispherical protrusion or bulge, protruding from a surface of the lever in a direction opposed to the mating direction, wherein the extremity of the protrusion is the point of mechanical contact with the housing establishing a fulcrum. This can allow for the movement of the shell and the pusher towards the lever to be advantageously concentrated in a single interfacing position, and for the lever to freely pivot around the protrusion with reduced damage, friction, or chafing.

In one aspect of the invention, each electrical contact can be held, in particular form and/or friction-fitted, in a corresponding contact sleeve, each contact sleeve comprising externally at least one shearing portion, the shearing portion being configured to establish a mechanical contact with the lever. In this configuration, the contact sleeves can be protective casings for the contacts and receive mechanical force from the lever without damaging or interfering with the function of the electrical contacts.

In one aspect of the invention, the shearing portion can comprise a protrusion having a load surface facing in the direction opposed to the mating direction, wherein the load surface is configured to receive a mechanical load from the lever. This improves the mechanical engagement of the contact sleeves with the lever.

In one aspect of the invention, each load surface of the respective contact sleeves can abut against a respective load extremity of the lever. By establishing the mechanical engagement between lever and contact sleeves at an extremity of the lever, the leveraging properties i.e. the mechanical advantage of the lever is improved.

In one aspect of the invention, the load extremities of the lever can rest freely on the respective load surfaces of the sleeves, thereby enabling a sliding movement of the load extremities on the load surfaces. In this configuration, the load extremities sliding on the load surfaces with the pivoting of the lever can act as cams. Thus, a linear motion is provided to the contact sleeves acting as cam followers.

In one aspect of the invention, the lever can be configured to pivot around the fulcrum within a predetermined maximal angular displacement range, the predetermined angular maximal displacement range being defined by course limiting means on the housing limiting the movement of the lever. Thus, the displacement of the lever in the shell of the connector can be limited to a desired range and does not impede connector design and function.

In one aspect of the invention, the connector can further comprise at least one safety pin that is moveable between a safe and an unsafe position, wherein in the unsafe position the safety pin is configured to prevent the mating of the connector with the second electrical connector, in particular by protruding from the housing in the mating direction and blocking the second electrical connector. A thus configured safety pin can avoid a mating of the connectors that is unsafe or unintended, for example if a component of the connector housing is incorrectly fit or incompletely installed.

In one aspect of the invention, the connector can further comprise for each contact sleeve one corresponding safety pin, each safety pin being moveable between a respective safe and a respective unsafe position, wherein in the unsafe position each safety pin is configured to prevent the mating of the connector with the second electrical connector, in particular by protruding from the housing in the mating direction and blocking the second electrical connector. In this way, the fitting of the each contact in a corresponding sleeve and of each sleeve in the connector housing can be individually safeguarded, and the mating prevented if one of said fittings is deficient.

In one aspect of the invention, the shell can have a circular shape in a plane orthogonal to the mating axis, and a surface of the shell can comprise a mechanical coupling device, in particular a threading or a friction-fit device or a clipping device, for the coupling of the connector with a mating mechanical coupling device, in particular a mating threading or friction-fit device or clipping device, of the second connector. Such a coupling allows a securing of the connection of the first and second electrical connector. In particular, the mating of the connectors by threading allows for good control of the progression of the mating, and can provoke a pivoting of the lever if needed due to diverging lengths of electrical connectors during the mating.

In one aspect of the invention, each electrical contact can be held in an internal hollow of the corresponding contact sleeve, each internal hollow comprising a seal element arranged to seal an opening to the internal hollow, in particular wherein the seal element is a triple barrier grommet, a gland seal or a bushing seal. This can prevent water from entering into contact with conducting surfaces of the electrical contacts.

The object of the invention can also be achieved by an electrical connector assembly comprising an electrical connector according to any one of the previous aspects, and a second connector. The second connector comprises a mating housing configured to be mated with the housing of the electrical connector, and corresponding electrical contacts configured to be mated with the electrical contacts of the electrical connector, wherein the lever is pivoted around the fulcrum such that each contact is bottomed out against its respective corresponding electrical contact. This assembly allows for a high-power electrical connection with reduced fretting corrosion, by virtue of the advantages of above-described connector.

In one aspect of the assembly, the second connector can also be an electrical connector according one of the above-described aspects. When both electrical connectors are connectors according to an aspect as described above, the positions of the corresponding mating electrical contacts of the mating second electrical connector can be adjusted in conjunction with the positions of the electrical contacts of the electrical connector. In this configuration, one connector can have male-type electrical contacts and the other connector female-type contacts or reverse, and the bottoming can occur between the terminal, or distal, end surfaces of the male type electrical contacts and the female type electrical contacts.

The object of the invention can further be achieved by a lug-free electrical connector assembly, in particular for high power applications using currents of 50A and higher, in particular 200A or higher, comprising a first electrical connector, in particular an electrical connector one of the above described aspects, mated with a second electrical connector along a mating axis. The first electrical connector comprises a first housing defining an internal connector space mated with a mating second housing of the second connector.

The first electrical connector further comprises at least two first electrical contacts housed in the internal connector space and mated with corresponding electrical contacts of the second connector, wherein the terminal end surface, in particular the distal end surface, of each of the first electrical contacts at least partially abuts against the respective mating surface of a corresponding electrical contact receptacle, and wherein the abutment of all electrical contact pairs is secured by a tilted arrangement of the first housing relatively to the mating second housing with respect to the mating axis.

The lug-free assembly allows for divergences in electrical contact lengths within manufacturing tolerances to be compensated by a tilting of the first connector housing relatively to the second connector housing. When one electrical contact of the electrical contacts is longer than the others, such that its terminal end surface abuts first against a mating surface of a corresponding contact receptacle during mating, the first housing can be tilted to accommodate the length difference. In particular, the first housing can be tilted to move the shorter electrical contact or contacts forward until they abut against the mating surfaces of their respective corresponding contact receptacle.

In one aspect of the lug-free electrical connector assembly, the housing of the first electrical connector can be coupled with, in particular screwed on, the second connector, wherein the tilting of the first housing relatively to the mating second housing is enabled by gap allowances between a first mechanical coupling device of the first electrical connector and a second mechanical coupling device of the second connector, in particular wherein the first mechanical coupling device is a screw thread and the second mechanical coupling device is a nut thread. The gap allowances allow for the tilting of the first housing relatively to the second housing along the mating axis without damaging the housing. In particular, it limits the tilting to a predetermined maximal angular displacement depending on the gap allowance between first and second mechanical coupling device.

In one aspect of the lug-free electrical connector assembly, in the tilted arrangement, the mutual facing surfaces of the first and second housings can only partially abut. This can allow for the tilting of the first connector relatively to the second connector until bottoming of the contacts is achieved without endangering connector assembly locking safety.

In one aspect of the lug-free electrical connector assembly, the housings of the first and of the second electrical connector can have a rectangular shape in a plane orthogonal to the mating axis, wherein the housing of the first electrical connector comprises a plug, and wherein the housing of the second electrical connector comprises a mating receptacle extending centrally in the housing and configured to receive and mate with the plug. In this configuration, the coupling of the electrical connector with the second connector can be done through a mechanical coupling device, for example by screwing a threaded plug in a threaded receptacle, which can provoke a pivoting of the lever during the mating if needed due to diverging lengths of electrical contacts.

The object of the invention is also achieved with a lug-free electrical connector assembly, in particular for high power applications using currents of 50A and higher, comprising a first electrical connector mated with a second electrical connector along a mating axis, the first electrical connector comprising a first housing defining an internal connector space and mated with a mating second housing of the second connector, and the first electrical connector comprising an electrical socket contact housed in the internal connector space and mated with a corresponding electrical contact of the second connector, wherein a terminal end surface, in particular a distal end surface, of the first electrical contact at least partially abuts against a respective mating terminal end surface, in particular a distal end surface, of the corresponding electrical contact, in particular wherein the shell terminal surfaces of the first housing do not abut against the respective shell terminal surfaces of the second housing.

This lug-free connector assembly ensures that the bottoming out of the first and the second electrical connector occurs at the respective electrical contacts, instead of at the connector housings. As the mating force is primarily applied at mating, frontally engaged contact surfaces, any relative vibration-induced movements can be reduced or eliminated. In consequence, the occurrence of fretting corrosion can be reduced or eliminated.

In one aspect of the assembly, the electrical socket contact can be held, in particular removably form- and/or friction-fitted, in a first contact sleeve, the first contact sleeve in turn being removably form and/or friction-fitted in the first housing, and/or the corresponding electrical contact is held, in particular removably form and/or friction-fitted, in a second contact sleeve, the second contact sleeve in turn being removably form and/or friction-fitted in the second housing. The contact sleeves can serve as protective casings for the contacts and as insulation devices for insulating the energized contacts from other connector housing components. Removable sleeves can allow for electrical contacts to be regularly verified and exchanged in the context of connection maintenance.

In one aspect of the assembly, the first electrical connector further can comprise a first safety pin and/or the second electrical connector can comprise a second safety pin, each safety pin being moveable between a safe and an unsafe position, wherein in the unsafe position the safety pins prevent the mating of the first and second electrical connectors, in particular by protruding from the respective housing in the direction of the respective mating connector. The safety pins can reduce the risk of a mating of the connectors that is unsafe or unintended, for example if a component of the first or second housing is incorrectly fit or incompletely installed.

In one aspect of the assembly, the first housing can comprise a first mechanical coupling device, in particular a nut thread, and the second housing can comprise a second mechanical coupling device, in particular a screw thread, wherein the first and the second mechanical coupling devices are configured to enable the coupling, in particular the screwing together, of the first and second electrical connectors. The first and second mechanical coupling devices can help realize the coupling of the first and second electrical connectors.

The invention also relates to a sleeve removal tool for the removal of an electrical contact sleeve for an electrical contact in electrical connector, in particular for the removal of a contact sleeve according to one of the previously described aspects from a connector according to one of the previously described aspects. The sleeve removal tool is configured to be insertable in a corresponding through hole and to displace a safety pin, in particular a safety pin as described in one of the aspects of the present disclosure, from a safe position into an unsafe position.

The object of the invention can furthermore be achieved by a method of a lug-free connecting of a first electrical connector having at least one electrical contact provided in an internal connector space of a first housing, with a mating second electrical connector having at least one mating electrical contact receptacle provided in an internal space of a mating second housing, along a mating axis. The method comprises the steps of:
a) abutting a terminal end surface, in particular a distal end surface, of the at least one electrical contact of the first electrical connector against a mating surface of the at least one mating electrical contact receptacle of the second electrical connector, and
c) mechanically securing the electrical connection by realizing a friction and/or form-fit connection between the first housing and the second housing.

This method of lug-free connecting of connectors can be applied to achieve the advantages of a fretting-corrosion-free connection.

In one aspect of the method, in which the first electrical connector has at least one second electrical contact provided in the internal connector space of the first housing, and the second electrical connector has at least one mating second electrical contact receptacle provided in the internal connector space of the mating second housing, the method can further comprise a step of
b) abutting the terminal end surface, in particular the distal end surface, of the second electrical contact of the first electrical connector against a mating surface of the second electrical contact receptacle of the second electrical connector, while keeping the terminal end surface, in particular the distal end surface, of the first electrical contact abutted against the mating surface of the mating first electrical contact receptacle,

This method can allow fretting-corrosion-free connection to be obtained in a scenario in which two contacts are held in a single connector housing.

According to another aspect of the invention, which can, however, be combined with any one of the aspects as described above individually or in combination, the object to provide an improved connector, in particular high power connector for dynamic environments, is also achieved with an electrical connector, in particular for high power applications using currents of 50A and higher, configured to be mated with a second connector along a mating axis, and comprising a housing and at least one contact sleeve housed in the housing, wherein the contact sleeve is configured to house an electrical contact, and wherein the contact sleeve is moveable in the housing between a locked position and an unlocked position. In the unlocked position, the contact sleeve can be removed from the housing, in particular together with the electrical contact. In contrast thereto, the contact sleeve is correctly positioned and firmly attached to the housing in the locked position.

According to this aspect of the invention, it becomes possible to inspect and/or exchange contact sleeves without having to completely exchange the connector itself.

The electrical connector further comprises at least one safety pin that is moveable between a safe and an unsafe position, wherein in the unsafe position the safety pin is configured to prevent the mating of the connector with the second electrical connector, in particular by protruding from the housing in the mating direction and blocking the second electrical connector so that no electrical connection can be established between the electrical connector and the second connector, when the contact sleeve with the electrical contact is in the unlocked position.

In contrast thereto, the safety pin can furthermore be configured such that if the contact sleeve is correctly positioned in the locked position, an electrical connection between the electrical connector and the second connector can be established. Preferably, the safety pin can be no longer protruding from the housing in the mating direction in the safe position, thus allowing the mating between the connectors.

The safety pin ensures that a mating of connectors only becomes possible when the contact sleeves are correctly assembled with the housing. According to an embodiment, the safety pin is mechanically blocked by the contact sleeve, in particular by a protrusion on the outside of the contact sleeve, from moving from the unsafe to the safe position, as long as the contact sleeve has not yet moved into the locked position.

Thus, the safety pin can only move into its safe position when the sleeve has been correctly assembled with the housing.

According to an embodiment, the safety pin can be configured to prevent the contact sleeve from being moved from the locked to the unlocked position when in the safe position. Thus, an unwanted disassembly can be prevented.

In one embodiment, the electrical connector can comprise a spring arrangement configured such that in the unsafe position the spring arrangement is loaded, in particular by the protrusion on the outside of the contact sleeve, and such that the spring arrangement moves in the safe position by the spring restoration force, in particular to thereby move the safety pin from the unsafe, protruding position to the safe, non-protruding position.

In one embodiment, the moveable safety pin can be arranged in the housing along a direction of insertion of the contact sleeve during the assembly of the electrical connector, such that the pre-loaded spring arrangement counteracts an insertion movement of the contact sleeve as long as it is in the unlocked position. Thus, the contact sleeve is repelled in the housing in a direction opposed to the insertion direction under the restoration force as long as it has not been brought into the locked position.

In one embodiment, the electrical connector can comprise for each contact sleeve one corresponding safety pin as described above.

These, as well as other objects and advantages of this invention will be more completely understood and appreciated by careful study of the following more detailed description of the presently preferred exemplary aspects and embodiments of the invention, taken in conjunction with accompanying drawings, in which:
Figure 1A shows a perspective view of an electrical connector according to an embodiment of a first aspect of the invention.
Figure 1B shows a connector configured to be mated with the electrical connector of Figure 1A.
Figure 1C shows the electrical connector of Figure 1A and the second connector of Figure 1B in an intermediate mating state.
Figure 1D shows a different perspective view the electrical connector of Figure 1A, in which the connector has retracted safety pins.
Figure 2A shows a first cross-sectional view of the electrical connector of Figures 1A, 1D, and the second connector of Figure 1B, in a mated state.
Figure 2B shows the arrangement of the lever and the pusher element in the electrical connectors of Figures 1A and 1B.
Figure 2C shows the arrangement of the lever and the contact sleeves in the electrical connectors of Figures 1A and 1B.
Figure 2D shows a second cross-sectional view of the electrical connector of Figures 1A, 1D and the second connector of Figure 1B in a mated state.
Figure 2E illustrates a method of a lug-free connecting of a first and a second electrical connector according to the invention.
Figure 3A shows the contacting area of the cross-section of Figure 2A in an example in which the electrical contacts of the electrical connector have nominal length.
Figure 3B shows the contacting area of the cross-section of Figure in an example in which the electrical contacts of the electrical connector have minimal length within manufacturing tolerance.
Figure 3C shows the contacting area of the cross-section of Figure 2A in a case where the electrical contacts of the electrical connector have maximal length within manufacturing tolerance.
Figure 3D shows the contacting area of the cross-section of Figure 2A in a case in which one contact has minimal length, and another contact has maximal length, within manufacturing tolerance.
Figure 4 shows a lever for an electrical connector according to a second embodiment of the first aspect of invention.
Figure 5 shows a connector assembly according to an embodiment of a second aspect of the invention.
Figure 6 shows a different embodiment of a connector assembly according to the second aspect of the invention.
Figure 7A shows a perspective view of a connector for a lug-free connector assembly according to an embodiment of a third aspect of the invention.
Figure 7B shows cross-sectional view the lug-free connector assembly comprising the connector of Figure 7A.
Figure 8 shows a view of the second connector of Figure 1B in the context of a contact sleeve removal using a sleeve removal tool.
Figure 9 shows a comparative view of an alternative pair of electrical contacts.

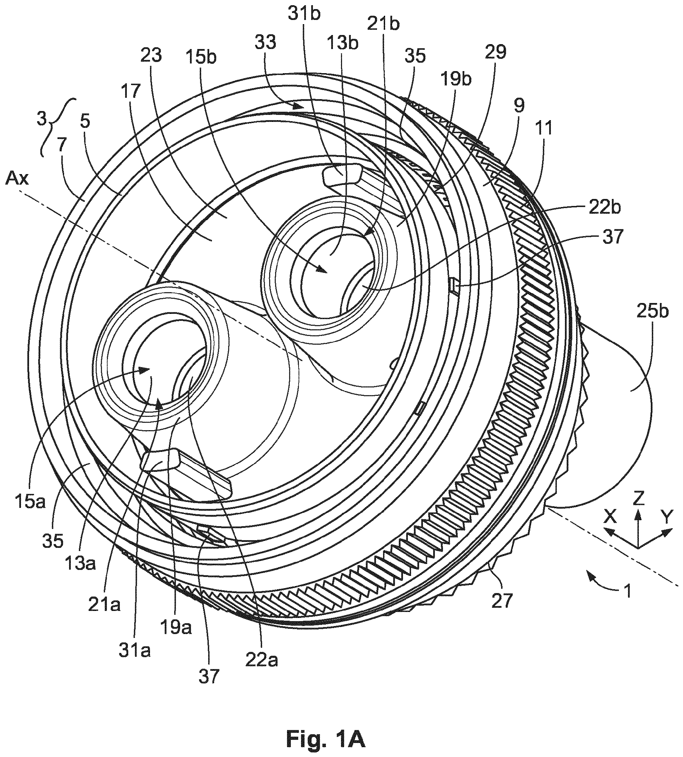

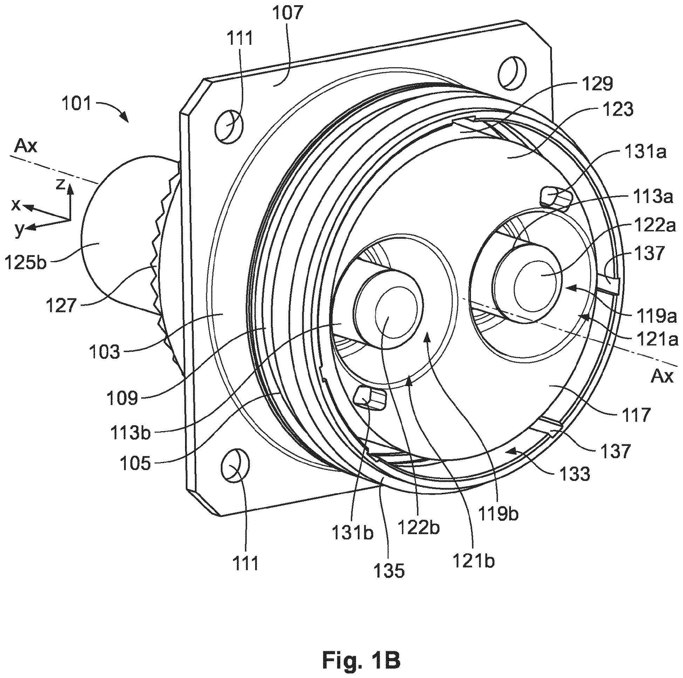

Figure 1A shows a perspective view of an electrical connector 1 according to an embodiment of a first aspect of the invention. The electrical connector 1 is configured to be mated in the mating direction x parallel to the mating axis AX with a mating second connector, for example the second electrical connector illustrated in Figure 1B.

In this embodiment, the electrical connector 1 is a mobile connector, also called plug connector, to be manually mated with a fixed, or immobile, mating second connector, also called receptacle connector. For example, the electrical connector 1 is suited to establish power transmission connection for a power cable in an electrical vehicle, e.g. an electrical aircraft.

The electrical connector 1 comprises a housing 3, including an inner shell 5 surrounded by an outer shell 7. The inner shell 5 and the outer shell 7 have concentric circular cross-sections. As will be explained further down, the outer shell 7 is rotatably arranged around the inner shell 5. The outermost surface 9 of the outer shell 7 comprises a rugged surface portion 11 for an improved manual grip for rotation of the outer shell 7 with respect to the inner shell 5.

The electrical connector 1 further comprises two electrical contacts 13a, 13b located inside the inner shell 5. The electrical contacts 13a, 13b are, in a preferred embodiment, gold-plated or silver-plated copper contacts for improved conductance and corrosion-resistance properties. In this embodiment, the electrical contacts 13a, 13b are female contacts, or socket contacts, comprising cylindrical receptacles 15a, 15b configured to receive male contacts of a mating second connector. However, in alternative embodiments, the electrical contacts 13a, 13b can be male contacts to be received in corresponding female contacts.

The electrical contacts 13a, 13b extend inside the housing 3 in parallel to the mating axis AX and the receptacles 15a, 15b are configured to receive mating male contacts extending in a direction opposed to the mating direction x.

The inner shell 5 has a circular opening facing in the mating direction x, in which a thermoplastic electrical insulation body 17 is disposed, such that it separates an internal space of the inner shell 5 from the outside environment in a sealed and electrically insulated way. The insulation body 17 is disposed in the y-z plane perpendicular to the mating direction x, and comprises two hollowed-out cylindrical protrusions 19a, 19b, each protrusion 19a, 19b comprising an opening 21a, 21b providing a passageway through the insulation body 17 into the internal space of the inner shell 5.

The electrical contacts 13a, 13b are disposed in the protrusions 19a, 19b of the insulation body 17 such that the respective receptacles 15a, 15b of the contacts 13a, 13b match the openings 21a, 21b in the insulation body 17. In particular, the openings 21a, 21b are configured to receive male electrical contacts of a mating second connector during mating, and to achieve the abutment of male distal end surfaces of the male electrical contacts with the female mating surfaces 22a, 22b of the connector 1, as will be described further down.

An interfacial surface 23 of the insulation body 17 serves as an engagement surface with the mating second connector when mated. In a fully mated state and, when the electrical connection of the connector 1 with a mating connector is electrically energized, the insulation body provides electrical insulation between conducting elements, in particular between the electrical contacts 13a, 13b, and the connector housing 3.

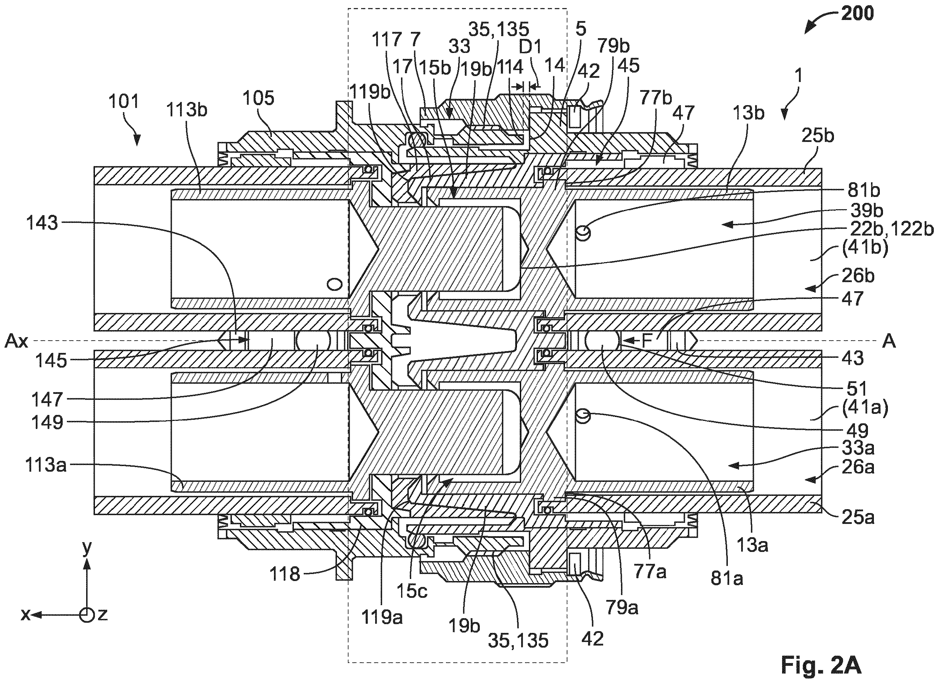

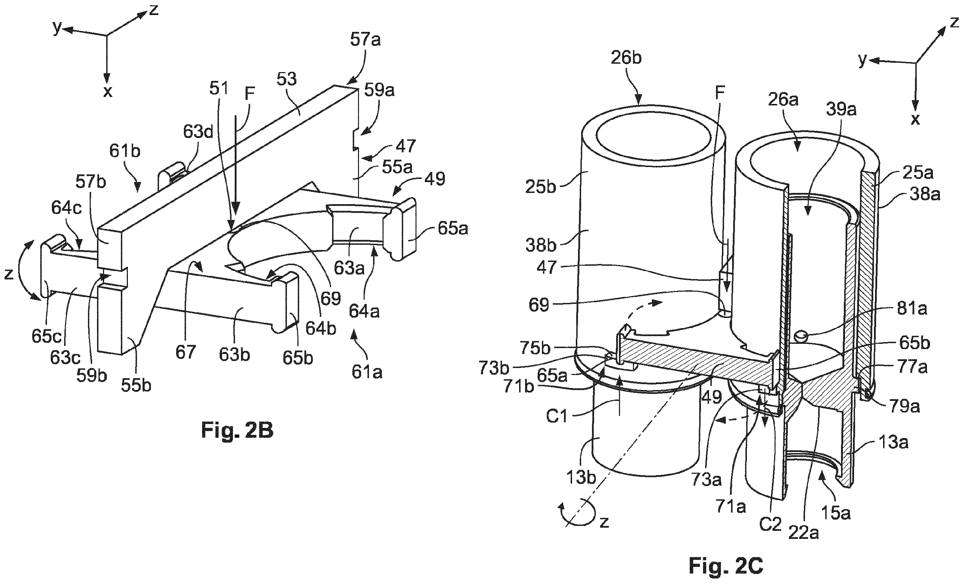

Two contact sleeves 25a, 25b (25a not visible on Figure 1A), also called locking inserts, extend from the internal space of the inner shell 5 in parallel to the mating axis AX in a direction opposed to the mating direction x. As will be explained with respect to Figures 2A and 2B, the contact sleeves 25a, 25b are hollowed out to hold the electrical contacts 13a, 13b. The sleeves 25a, 25b are used to fit and lock the electrical contacts 13a, 13b in the housing 3.

Figure 1A further illustrates a jagged outer circumferential ridge 27 of the outer shell 7, a metallic band 29 for radiofrequency interference filtering and two safety pins 31a, 31b. The safety pins 31a, 31b represent an optional safety feature to prevent mating of the connector 1 with a mating second connector in a case where the electrical contacts 13a, 13b or the contact sleeves 25a, 25b are not fully locked in the inner shell 5.

In the view of Figure 1A, the electrical contacts 13a, 13b or the contact sleeves 25a, 25b are not fully locked in the housing 3, which is indicated by the safety pins 31a, 31b protruding from the housing 3 in the mating direction x. The safety pins 31a, 31b protrude to block mating with a mating second connector while the electrical contacts 13a, 13b are not fully locked in the housing 3. In particular, the protruding safety pins 31a, 31b are configured to abut against a housing of a mating second connector.

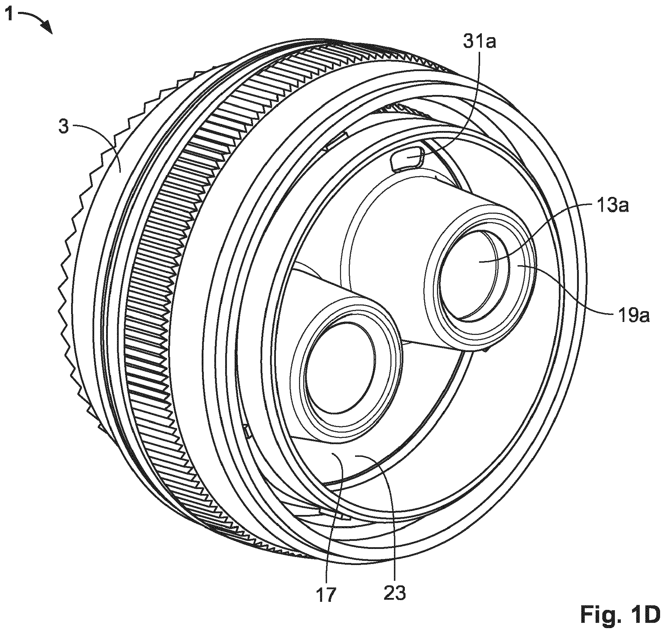

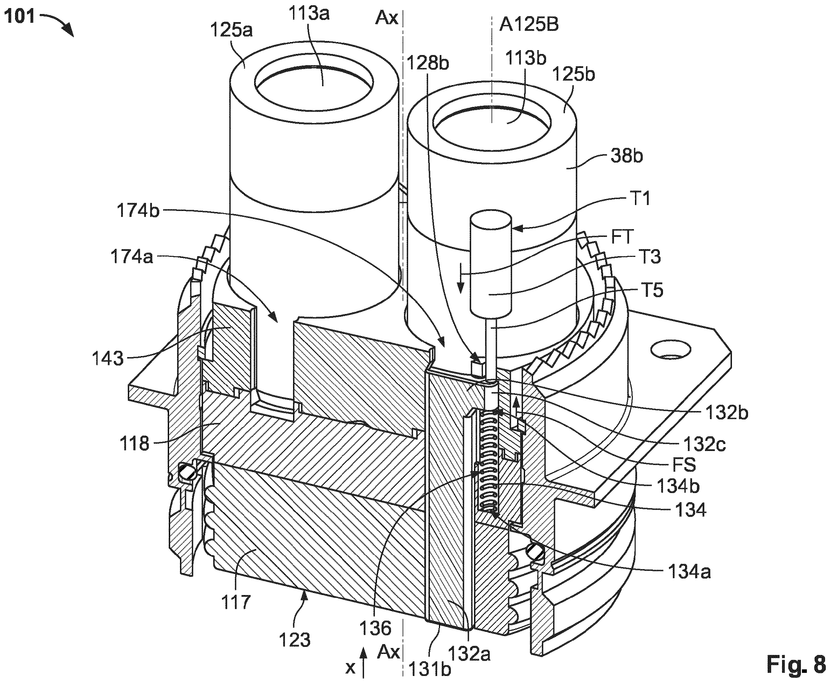

On the other hand, in a case in which the electrical contacts 13a, 13b and the contact sleeves 25a, 25b are fully locked in the housing 3, the safety pins 31a, 31b are retracted inside the inner shell 5 by means of a pre-loaded spring arrangement. While the safety pins 31a, 31b are retracted inside the inner shell 5, they lock and secure the contact sleeves 25a, 25b holding the contacts 13a, 13b in position. When the contact sleeves 25a, 25b, are in the locked and secured position, their position can only be freed again using an application-specific tool. This tool will be described in more detail with reference to Figure 8. A view of the connector 1 with locked and secured sleeves 25a, 25b is illustrated in Figure 1D.

The metallic band 29 is disposed on an outside surface of the inner shell 5 and is visible in a shell interspace 33 between the concentric inner and outer shells 5, 7. Inside the shell interspace 33, a shell threading of the outer shell 7 provides a threaded surface portion 35. Specifically, the threaded surface portion 35 is arranged circumferentially on an inner tubular wall of the outer shell 7. The threading extends along the mating axis AX and serves for the mating of the connector 1 in a mating direction x when engaged with a matching threaded portion of a mating second connector.

In this embodiment, the threaded surface portion 35 is a nut-side threading, or nut thread, forming a threaded receptacle configured to be matched with a screw-side threading, or screw thread, on an outer surface of a mating second connector. However, in alternative embodiments, the electrical connector could comprise a screw-side threading on an outer surface of the inner shell 5, to be matched with a nut-side threading of another mating second connector.

The outer circumferential ridge 27 faces in the direction opposed to the mating direction x and is jagged, thereby presenting triangular teeth. The teeth of the jagged ridge 27 provide an interface to accessories to be installed on connector 1 for a tooth-by-tooth tightening or screwing control of the connector 1 during mating and coupling with a mating second connector.

In addition, centring keys 37 are provided on the outer surface of the inner shell 5. The centring keys 37 are arranged to form fit into mating features in a mating second connector to simplify alignment with said mating second connector.

Figure 1B shows a second electrical connector 101 that is a suitable mating second connector for the mating with the electrical connector 1 of the embodiment described with reference to Figure 1A. The second connector 101 is a fixed, or immobile, mating second connector, also called receptacle connector, and comprises a mating housing 103, which comprises a shell 105 and a baseplate 107. The baseplate 107 comprises through holes 111 for screw fixation of the baseplate 107, for example to a body panel.

On an outermost surface 109 of the shell 105, a threaded surface portion 135 is arranged circumferentially to provide a screw-side threading to form a threaded plug. The threaded surface portion 135 extends along the mating axis AX and thus matches the threading of the threaded surface portion 35 of the electrical connector 1. In variants of the invention, instead of a threaded surface portion 135, the surface portion can comprise for example a friction-fit device or a clipping device.

Inside the shell 105 of the housing 103, an interfacial insulation body 117 presenting a mating interfacial surface 123 is arranged. The interfacial insulation body 117 is an elastomer that is arranged to seal and electrically insulate the connection. The interfacial insulation body 117 comprises two cylindrical hollows 119a, 119b extending along the mating axis AX and traversing the interfacial surface 123 in the hollow openings 121a, 121b. Male electrical contacts 113a, 113b are disposed in the hollows 119a, 119b of the insulation body 117 and are accessible through the hollow openings 121a, 121b. The contacts 113a, 113b are corresponding mating electrical contacts with respect to the contacts 13a, 13b of the connector 1. The extremities of the male contacts 113a, 113b comprise distal end surfaces 122a, 122b, which extend in a y-z plane orthogonal to the mating direction x. The contacts 113a, 113b are held in contact sleeves 125a, 125b form-fitted in the housing 103, only sleeve 125b being visible on Figure 1B.

In one embodiment, the cylindrical hollows 119a, 119b in the insulation body 117 can each comprise a plurality, for example three, ring-shaped ribs circumferentially arranged. When the protrusions 19a, 19b of the connector 1 are inserted in the respective hollows 119a, 119b, the electrical connection is thus water sealed.

The insulation body 117 of the second connector 101 is installed in the inner shell 5 of the connector 1 such that an annular interspace 133 is formed between the circumferential surface 129 of the insulation body 117 and the shell 105. The annular interspace 133 is configured to receive the inner shell 5 of the housing 3 of the connector 1 during mating of the connectors 1, 101.

Like the electrical connector 1, the second connector 101 comprises two safety pins 131a, 131b configured to prevent mating in a case where the electrical contacts 113a, 133b or the contact sleeves 125a, 125b are not fully locked in the housing 103. In the view of Figure 1B, the electrical contacts 113a, 133b and sleeves 125a, 125b are fully locked in the housing 103, which is indicated by the safety pins 131a, 131b being retracted inside the inner shell 105. In particular, they are retracted by means of a pre-loaded spring arrangement. In a case in which an electrical contact 113a, 133b was not fully locked, a respective safety pin 131a, 131b would extend in the direction opposed to the mating direction x and block mating, as described and shown on the electrical connector 1 described with respect to Figure 1A.

An outer circumferential ridge 127 of the shell 105 facing in the mating direction is jagged comparably to the ridge 27 of the first connector 1. Further, centring dents 137 are formed in the shell 105 facing towards the annular interspace 133, configured to receive the centring keys 37 of the connector 1 and to establish a form fit. In particular, during mating, the form fit between the centring keys 37 and the centring dents 137 blocks rotational movement between inner shell 5 of the connector 1 and the shell 105 of the second connector 101, so as to allow for a mating of the connectors 1, 101 by a screwing of the outer shell 7 around the shell 105 of the connector 101. In addition, the keys 37 and dents 137 simplify correct coupling.

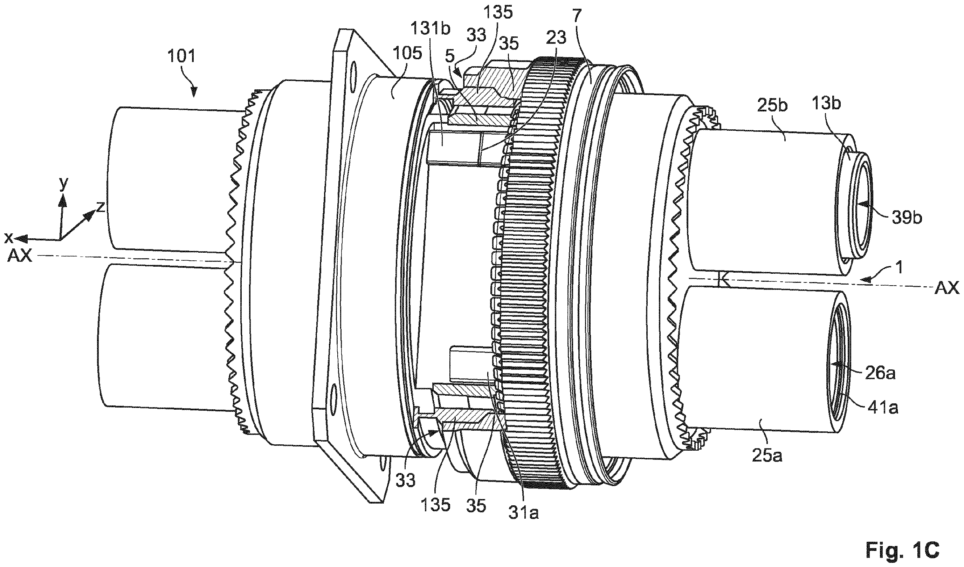

Figure 1C illustrates the electrical connector 1 of Figure 1A and the second connector 101 of Figure 1B in an intermediate mating state of assembly. For visibility purposes, corresponding angular sections of the outer shell 7 and the inner shell 5 of the first connector 1, as well as of the shell 105 of the second connector 101, have been removed to visualize internal components and describe the intermediate mating state.

In Figure 1C the mobile connector 1 has been moved towards the second connector 101. Thereby, the shell 105 of the second connector 101 was inserted in the shell interspace 33 between the inner and outer shells 5, 7 of the connector 1, and the inner shell 5 was inserted in the annular interspace 133 between the insulation body 117 and the shell 105 of the second connector. However, in this intermediate mating state, the threaded surface portion 35 on the outer shell 7 of the connector 1 has not yet reached the threaded surface portion 135 on the shell 105 of the second connector 101. Therefore, the respective screw thread and nut thread cannot grip, and the mating cannot progress.

Indeed, Figure 1C shows a fictional illustrative example in which contact sleeves 25a, 25b are not correctly locked with their respective electrical contacts 13a, 13b in the housing 1. For example, in the example of Figure 1C, the contact 13a is absent or missing, and the contact 13b is "loose" and protruding outwards from the contact sleeve 25b in the direction opposite to the mating direction x, indicating that the contact 13b is only partially inserted and not fully locked in the contact sleeve 25b. The exemplary position of contact 13b serves only to illustrate an incorrect locking in the housing 1 and does not correspond to a typical stationary state of the contacts 13a, 13b in the sleeves 25a, 25b.

Figure 1C shows that a wiring receptacle 39b is formed in an end of the contact 13b. In particular, it is formed in an end that is opposed to the end in which the receptacle 15b is formed. The wiring receptacle 39b is configured to receive a wire of a high-power cable. The structure of the wiring receptacle 39b is more clearly visible and described in regard to Figure 2A.

Figure 1C further illustrates that a seal element 41a is provided in an internal hollow 26a inside the contact sleeve 25a. The seal element 41a is used to seal the passage of a high power cable inserted in the internal hollow 26a of the contact sleeve 25a, to be attached to a wiring receptacle of the electrical contact 13a. The seal element 41a is a triple barrier grommet, suited in particular for a round wire of a high power cable. Alternatively, a stronger sealing system like e.g. a gland/bushing solution can be used.

Because the contact sleeves 25a, 25b of the electrical connector 1 are not fully and properly locked in the housing 3, the safety pins 31a, 31b are fully expanded, as also shown in Figure 1A. Similarly, the safety pins 131a, 131b of the second electrical connector 101 are expanded to protrude in the direction opposed to the mating direction x, which indicates that the contacts 113a, 113b or the sleeves 125a, 125b are not fully locked in the housing 103. The expanded safety pins 131a, 131b abut against the interfacial surface 23 of the insulation body 17 of electrical connector 1, preventing the threads 35, 135 of the respective connectors 1, 101 from gripping and thus blocking the mating as long as one of the contact is not properly securely locked

For illustration purposes, Figure 1D shows the electrical connector 1 from a different perspective from Figure 1A. In particular, Figure 1D shows the connector 1 in the case in which the electrical contact 13a is fully locked with the contact sleeve 25a (not visible in Figure 1D) in the housing 3 and correctly positioned in the protrusion 19a. Thus, and in contrast to the case of Figure 1A, the safety pin 31a is fully retracted in the housing 3 and does not protrude from the interfacial surface 23 of the insulation body 17. Therefore, the safety pin 31a does not block connector 1 from being mated with a mating second connector, for example the second electrical connector 101 as illustrated on Figure 2A.

Figure 2A shows a connector assembly 200 in a fully mated state, the assembly 200 comprising the electrical connector 1 and the second electrical connector 101 described above. Figure 2A is a first cross-sectional view of the connectors 1, 101 along the x, y plane as shown in Figure 1C.

The cross-sectional view of Figure 2A shows that a frictional ring 42 is disposed in between the substantially tubular inner and outer shells 5, 7. In particular, the frictional ring 42 is disposed circumferentially around the inner shell 5 such that it is in partial frictional contact with the outer shell 7. The partial frictional contact provides increased resistance against unwanted rotational movement of the outer shell 7 around the inner shell 5. The connectors 1, 101 can further comprise an additional anti-decoupling device, for example a clicker-nut system or a ball-lock system. The anti-decoupling device maintains the outer shell 7 in statically place in a given rotational state with respect to the inner shell 5.

The inner shell 5 defines, together with the insulation body 17 and a backside cover 43, an internal connector space 45 of the connector 1.

Inside the internal connector space 45 are provided a pusher element 47 and a lever 49. The contact sleeves 25a, 25b hold the female electrical contacts 13a, 13b in respective internal hollows 26a, 26b of the sleeves 25a, 25b. The contact sleeves 25a, 25b extend through an opening in the backside cover 43 at least partially into the internal connector space 45. The pusher element 47 and lever 49 are in mechanical contact at a single interface point of contact, defining a fulcrum 51.

The structural features of pusher element 47 and lever 49, as well as their arrangement inside the internal connector space will be described in detail with respect to Figures 2B to 2D.

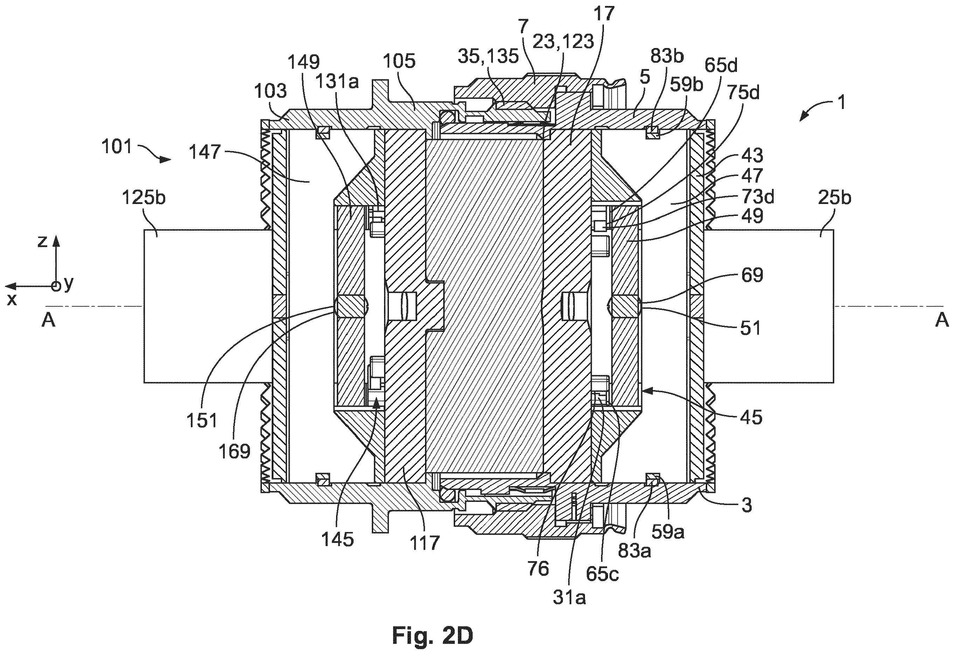

The sleeves 25a, 25b lock the contacts 13a, 13b in place in the respective insulation body protrusions 19a, 19b of the insulation body 17 by a form fit device. In particular, the contacts 13a, 13b are locked against the insulation body 17 by internal circumferential ledges 77a, 77b matching circumferential protrusions 79a, 79b on the external surface of the contacts 13a, 13b. The ledges 77a, 77b and protrusions 79a, 79b will be described further in reference to Figure 2D. Only when the contacts 13a, 13b are fully locked in place by respective contact sleeves 25a, 25b do the safety pins 31a, 31b of Figure 1A retract inside the internal space 45.

The wiring receptacles 39a, 39b are formed in the extremities of the contacts 13a, 13b that are opposed to the extremities in which the receptacles 15a, 15b are formed. The wiring receptacles 39a, 39b extend in parallel to the mating axis AX inside the electrical contacts 13a, 13b and are configured to receive high power conductor cable terminations. Through holes 81a, 81b in the electrical contacts 13a, 13b lead into the wiring receptacles 39a, 39b and facilitate a visual verification of the positioning of wire terminations in the wiring receptacles 39a, 39b of the contacts 13a, 13b.

Further, each internal hollow 26a, 26b of the respective contact sleeve 25a, 25b is provided with a triple barrier grommet 41a, 41b. The grommets 41a, 41b are configured to prevent water from entering into contact with electrically conducting surfaces when high power conductor cable are mounted to the contacts 13a, 13b.

In this embodiment, a pusher element 147 and a lever 149 are arranged in an internal space 145 of the second connector 101 as in the electrical connector 1. The internal space 145 is formed by the shell 105, the insulation body 117, and a backside cover 143, as in the electrical connector 1. Additionally, a secondary insulation 118, for example a thermoplastic like insulation body 17, disposed between the insulation body 117 and the contacts 113a, 113b provides additional electrical insulation. However, in a variant, the second connector can also be connector without pusher element 147 and lever 149.

In the mated state of Figure 2A, the outer shell 7 has been screwed over the shell 105 of the second connector by matching the threaded portions 35, 135.

According to the invention, the protrusions 19a, 19b of the insulation body 17 of the connector 1 are received in the hollows 119a, 119b of the second connector 101 such that the male contacts 113a, 113b of the second connector 101 are received in the receptacles 15a, 15b of the female contacts 13a, 13b. Further according to the invention, the electrical contacts 13a, 13b are bottomed out with the respective male contacts 113a, 113b by virtue of the abutment of distal end surfaces 122a, 122b against the female mating surfaces 22a, 22b. In contrast thereto, the housing 3 of the first connector 1 and the housing 103 of the second connector 101 are separated by a gap D1 between a terminal surface 14 of the inner shell 5, at the bottom of the shell interspace 33, and a mating terminal surface 114 of the shell 105 of the second connector. The surfaces 14, 114 are separated by the gap D1 and are thus not bottomed out.

As will be further clarified in the followin7g, this is achieved by dimensioning the contacts 13a, 13b to abut before the housings 3, 103, in particular before the surfaces 14, 114. In particular, when the outer shell 7 is screwed on the shell 105 of the second connector 107, the rotational movement is transferred as translational movement to the pusher 49 and concentrated from the pusher element 47 through the fulcrum 51 on the lever 49. The lever in turn distributes the mating force to the contact-holding sleeves 25a, 25b in accordance with the respective lengths of the contacts 13a, 13b, 113a, 113b within manufacturing tolerance, that is, in accordance with respective abutment locations of contact pairs 13a-113a, 13b-113b along the mating axis AX, until all pairs 13a-113a, 13b-113b are bottomed out with each other.

Figure 2B shows a perspective view of the lever 49 and the pusher element 47 as arranged inside the electrical connector 1. The pusher element 47 comprises a linear crossbeam section 53 configured to cross the internal space 45 defined by the inner shell 5 diametrically. When mounted into the inner shell 5 as shown in Figures 2A and 2D, the crossbeam section 53 crosses the internal space 5 along the direction z, orthogonal to the mating direction x and has a rectangular cross-section in the y-z plane.

The pusher element 47 comprises at both ends along the direction z lateral arms 55a, 55b, which extend from the pusher element 47 in the mating direction x and loosely envelop the lever 49. On the outward surfaces 57a, 57b of the lateral arms 55a, 55b, indentations 59a, 59b are formed to facilitate a form fit of the pusher element 49 in the inner shell 5, as can be seen in Figure 2D described further down.

The lever 49 has the shape of a flat cuboid, in which two hemicylindrical excavations 61a, 61b have been formed from two opposing sides of said cuboid shape. The excavations 61a, 61b are configured to accommodate the contact sleeves 25a, 25b. The excavations 61a, 61b are excavated in the cuboid such that four arms 63a, 63b, 63c, 63d are formed, each at one distal corner of the cuboid. Each one of the arms 63a, 63b, 63c, 63d comprises a respective rounded load extremity 65a-65d protruding in mating direction x.

Peripheral cut-outs 64a, 64b, 64c are cut in the cuboid along the circumferential walls of the hemicylindrical excavations 61a, 61b. The cut-outs 64a, 64b, 64c facilitate passage of shearing protrusions formed on outer surfaces of the contacts sleeves 25a, 25b as shown in Figure 2C, when the sleeves 25a, 25b are inserted through the lever 49 during mounting. Thus, the contact sleeves 25a, 25b as well as the electrical contacts 13a, 13b can be exchanged if needed within a same connector.

A top surface 67 of the lever 49 facing in the direction opposed to the mating direction x comprises a hemispherical bulge 69 in or close to its centre. Alternatively, the bulge 69 can be a hemispherical or differently rounded shape protruding in the direction opposed to the mating direction x.

The pusher element 47 is arranged across the lever 49, facing the top surface 67, along a mirror symmetry plane extending along the plane z-x of the lever 49. The pusher element 47 extends between the excavations 61a, 61b such that it does not cover the excavations 61a, 61b and allows the insertion of the sleeves 25a, 25b. The lever 49 and pusher element 47 are in mechanical contact at a single interfacing point at the summit 51 of the hemispherical bulge 69 with respect to the top surface 67 of the lever 49. Thus, a fulcrum 51 is realized for the pivoting of the lever 49 on the pusher element 47. In particular, as will be explained in relation to Figure 2C, a force F exerted by the pusher element 47 on the lever at the point 51 can generate counter forces at any of the load extremities 65a, 65b, 65c, 65d (65c, 65d not visible in Fig 2B but on Figure 2C) should they be engaged.

Figure 2C shows a perspective view of the lever 49 and the contact sleeves 25a, 25b as arranged inside the electrical connector 1. The pusher element 47 is only partially illustrated. In this view, the contact sleeve 25a, as well as the contact 13a held in the sleeve 25a, are partially opened to illustrate internal features.

As can be seen in the partial opening of the sleeve 25a and the contact 13a, the contact 13a has a cylindrical shape extending in the mating direction x. The cylindrical shape is hollowed out on a front side end towards the mating direction x to form the mating receptacle 15a with the female mating surface 22a, said surface 22a being configured to be bottomed out against the male distal end surface 122a of the contact 113a. On a back side end facing against the mating direction x, the contact 13a is hollowed out to form the wiring receptacle 39a with the through hole 81a.

Each sleeve 25a, 25b comprises on its outward facing surface 38a, 38b a shearing portion 71a, 71b on which and from which mechanical shearing forces are transmitted. In this embodiment, the shearing portions 71a, 71b comprise block-shaped shearing protrusions 73a, 73b. The block-shaped shearing protrusions 73a, 73b are engaged with the load extremities 65b, 65c of the lever 49 such that mechanical shearing forces or loads can be mutually transmitted.

Each block-shaped shearing protrusion 73a, 73b comprises a load surface 75b facing in the direction opposed to the mating direction x. The load extremities 65b, 65c of the lever 49 rest freely on the respective load surfaces 75a, 75b of the shearing protrusions 73a, 73b. In this way, as the lever 49 pivots as illustrated by the double sided arrow around the z-axis, the load extremities 65b, 65c slide along on the load surfaces 75a, 75b, while forces are transmitted along and against axis x. Thus, a pivoting movement of the lever 49 is transformed in a longitudinal movement of the sleeves 25a, 25b

During the mating and coupling of the connectors 1, 101, the contacts 13a, 13b advance together with connector 1 as it advances towards the second connector 101, because the mating force F is applied by the pusher element 47 form-fitted in the inner shell 5 on the bulge 69. In particular, the mating force is applied on the bulge 69 located at the centre of the top surface 67 of the lever 49. The force F moves the lever 49 and thus the contacts 13a, 13b forward until a first contact bottoming is reached. For example, in a case where the contact 13b has maximal length within manufacturing tolerance, such as N+0.5mm, while the contact 13a has nominal length N, the contact 13b may bottom out first against its mating contact 113b as the surfaces 22b, 122b abut.

When the first contact bottoming occurs and the mating motion of connectors 1, 101 is continued, the load extremity 65c presses on the load surface 75b, and a counterforce C1 against the mating direction x is applied to the load extremity 65c. Thus, a pivoting of the lever 49 around axis z at the fulcrum 51 is caused and the load extremity 65b rotates with the lever, moving at least partially in the mating direction x and pushing the shearing protrusion 73a. Therefore, the load extremity 65b moves the contact sleeve 25a the mating direction against the resistance of the weight of sleeve 25a, until the contact 13a bottoms out against the corresponding contact 113a at the mating contact surfaces 22a, 122a.

Each contact sleeve 25a, 25b further comprises an internal circumferential ledge 77a matching a circumferential protrusion 79a on the external surface of the respective contact 13a, 13b. The ledge 77a blocks the slipping of the sleeve 25a, 25b over the respective contact 13a, 13b at a predetermined depth inside the respective internal hollow 26a, 26b of the sleeve 25a. In particular, the matching ledge 77a and the protrusion 79a are formed on the sleeve 25a and contact 13a respectively such that the end of the contact 13a comprising the wiring receptacle 39a is held inside the internal hollow 26a of the sleeve 25a, while the end of the contact 13a comprising the mating receptacle 15a is held outside the sleeve 25a.

In an alternative embodiment, the contact sleeves 25a, 25b can be simplified by omitting the internal circumferential ledges 77a from the internal surface of the sleeves 25a, 25b. In this configuration, the circumferential protrusions 79a, 79b on the external surface of the respective contacts 13a, 13b can be extended outwardly so as to be blocked directly on an edge of the tubular walls of the sleeves 25a, 25b.

Figure 2D shows a second cross-sectional view of the connectors 1, 101, this time along the x-z plane as shown in Figure 1C. As in Figure 2A, the connectors 1, 101 are in a fully mated state. The insulation body 117 of the second connector 101 abuts on the insulation body 17 of the connector 1, such that the interfacial surface 23 and the mating interfacial surface 123 are engaged. The threaded surface portion 35 of the outer shell 7 is screwed on the threaded surface portion 135 of the shell 105. The safety pins 31a, 131a are retracted in their respective internal connector spaces 45, 145.

Figure 2D, together with Figure 2A, illustrates the arrangement of the internal connector space 45 of the first connector defined by the shell 5, the insulation body 17, and the backside cover 43. In particular, Figure 2D shows the arrangement of the lever 49 with respect to the pusher element 47 and the contact sleeves 25a, 25b.

A form fit connection between the inner shell 5 of connector 1 and the pusher element 47 is achieved by the indentations 59a, 59b of the lateral arms 63a, 63b of the pusher element 47, which are form fitted into mating recesses 83a, 83b formed in the inner shell 5. The pusher element 47 is engaged with the lever 49 at the fulcrum 51, at the summit of the bulge 69. The load extremity 65d of the lever 49 rests freely on a load surface 75d of a shearing protrusion 73d formed on sleeve 25b. The opposing load extremity 65c of sleeve 25b rests on the corresponding load surface 75c of the protrusion 73c. The load surface 75c and the protrusion 73c are hidden by a stabilizing element 76 of the insulation body 17.

Figure 2D shows that in this embodiment, the mating second connector 101 comprises a corresponding arrangement a pusher element 147 form-fitted in the shell 105, with a lever 149 interfaced with the pusher element 147 at a fulcrum 51 realized by a bulge 149 on the lever 149. Further, not visible on this embodiment, the contact sleeves 125b interact with the lever 149 in the same manner as described above, and thus, the second connector 101 benefits from the same advantage as connector 1. However, in alternative arrangements, the second connector 101 can be devoid of these elements and have a generic arrangement of the sleeves and contacts.

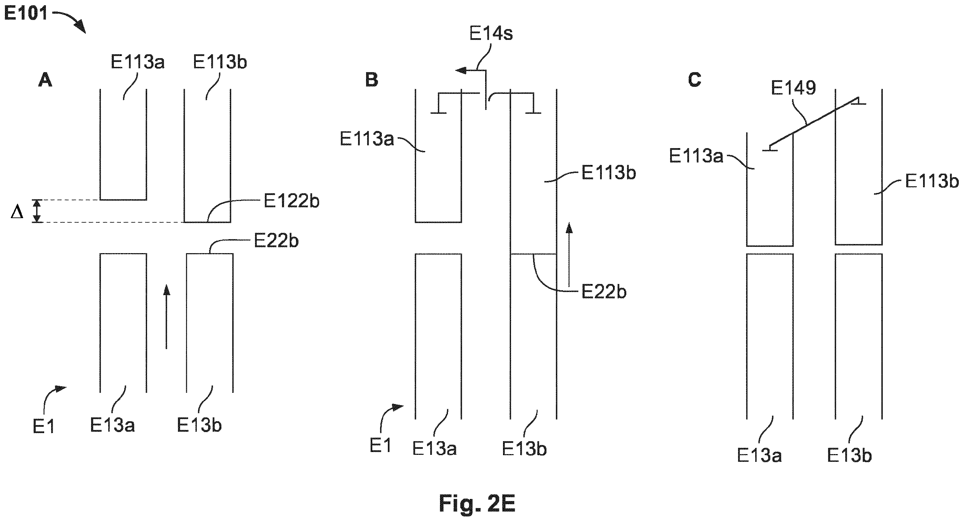

The mating sequence and the role of the lever 49 and pusher element 47 will now be described in more detail with respect to Figure 2E. Figure 2E depicts schematically a method of a lug-free connecting of a first electrical connector E1 having two electrical contacts E13a, E13b, with a mating second electrical connector E101 having two electrical contacts E113a, E113b.

The contacts E13a, E13b, E113a, E113b are provided in internal connector spaces of respective connector housings which have been omitted from Figure 2D for conciseness. Each one of the contact E13a, E13b, E113a, E113b has a contact length having a value within a manufacturing tolerance range. The manufacturing tolerance range is related to limitations in the accuracy and consistency of manufacturing. Thus, electrical contacts have a non-zero length difference. In Figure 2E, the contacts have E113a, E113b the length difference Δ, in which the contact E113b is longer than the contact E113a.

In a first step A, the first connector E1 is approached towards the second connector E101. The first connector E1 is approached towards the second connector E101 until a first contact bottoming occurs. When the first connector E1 is approached towards the second connector E101, a distal end surface E22b of the electrical contact E13b will abut first on the mating surface E122b of the mating contact E113b. Thus, a first contact bottoming is achieved, before any bottoming of a housing or shell of the connectors E1, E101.

In a second step B, with one distal end surface E22b of a first contact E13b abutted, a further progression of the connector E1 with respect to the other E101 leads to a pivoting of the lever E149 connected to the contact E113b and to the housing of connector E101 providing mechanical load. The pivoting of the lever E149 brings the second, yet unabutted, contacts E13a, E113a, closer until they bottom out against each other. At the same time, as the connector E1 continues progression towards E101, the surfaces E22b, E122b remain abutted.

In a third step C, after the lever 149 has pivoted to achieve the bottoming of each electrical contact pair E13a-E113a, E13b-E113b, the pivoted arrangement is mechanically secured. For example, the arrangement can be secured by a frictional ring such as the ring 42, providing a friction fit connection between rotating parts of a threaded housing. Thus, the bottoming out of each contact pair E13a-E113a, E13b-E113b is secured, even if exposed to vibrations. Other means of securing the connection can be used, in particular form and/or frictional fit based securing means, like a snap-on connection.

The method described above can be applied in particular to the connecting of the connectors 1, 101 described above. Therefore, as the connector 1 is mated by screwing the outer shell 7 on the shell 105 of the second connector 101, a force on fulcrum 51 is distributed to the contact sleeves 25a, 25b, until a first contact of either contact 13a or 13b bottoms out. At this point the effort is transferred efficiently to the respective second contact of either contact 13a or 13b, until all contacts are full bottomed out against their respective contacts 113a, 113b. The bottoming of connectors 1, 101 is thus not achieved in the housings 1, 3 but instead directly in the electrical contact pairs 13a-113a, 13b-113b.

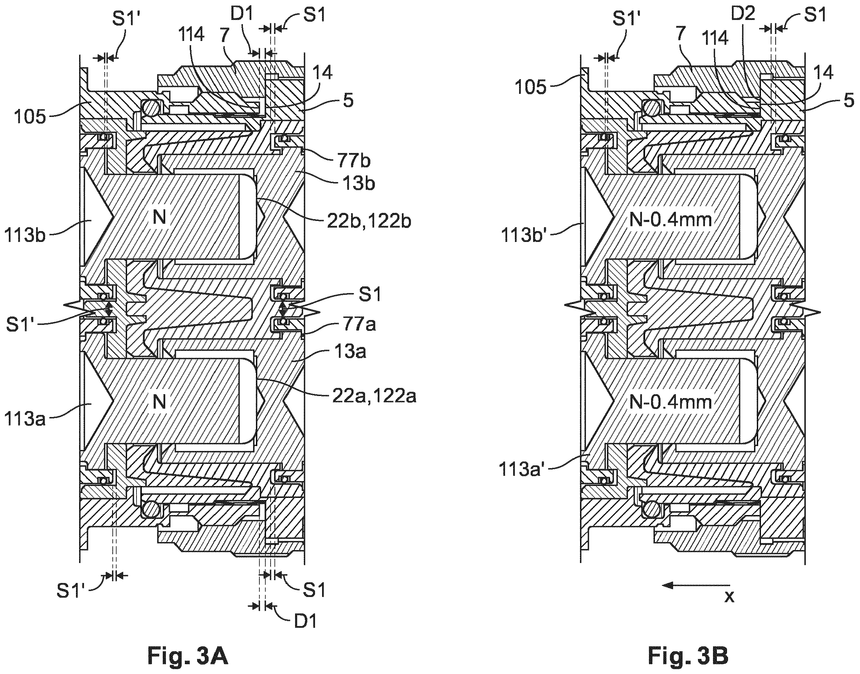

This will be further illustrated with respect Figures 3A-3D, representing four different electrical contacting configurations. Figures 3A to 3D show cross-sectional views of the contacting area of the connectors 1,101 in a fully mated state, in different electrical contact length scenarios. The four example scenarios depicted correspond cases that can typically occur as a result of fluctuations of contact lengths within manufacturing tolerances. These fluctuations increase the risk on fretting vibration occurring. However, as we will explain in the following, in each of these examples the assembly 200 can secure bottoming out of the contacts at the mating surfaces before any surfaces of the shells 5, 7, 105 of the connectors 1, 101 abut.

The cross-sectional views 3A to 3D correspond to cuts in the x-y plane as shown in Figure 2A. In particular, in Figure 3A the electrical contacts 113a, 113b both have nominal length N and the terminal surfaces 14, 114 of the connectors 1, 101 are separated by the gap D1. Therefore, Figure 3A corresponds to a cut-out of Figure 2A focused on the contacting area only.

In Figure 3B, the electrical contacts 113a', 113b' have minimal length within manufacturing tolerance, for example N-0.4mm. The connectors 1, 101 are separated by the gap D2.

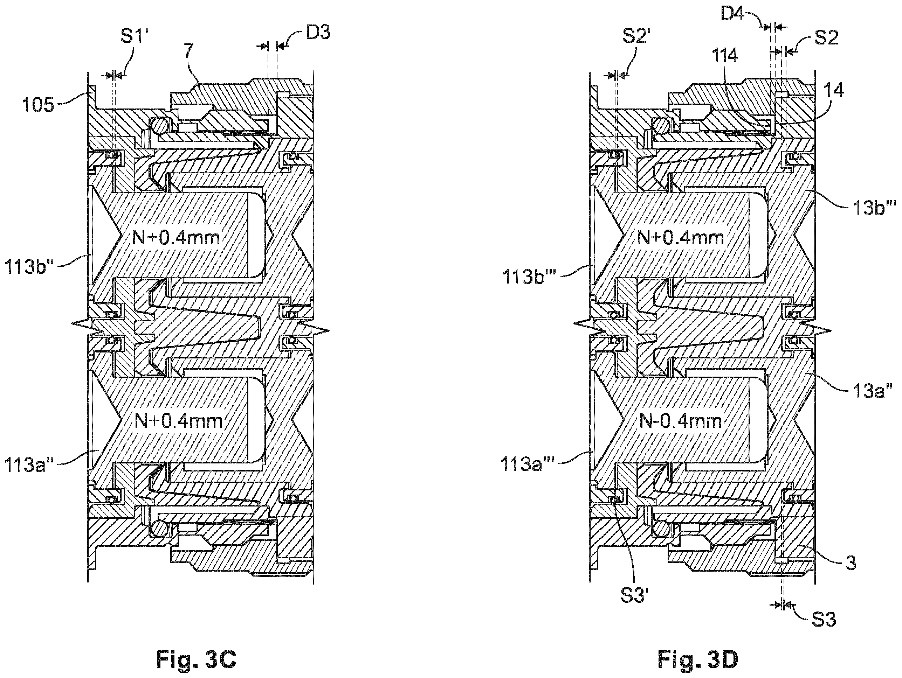

In Figure 3C, the electrical contacts 113a", 113b" have maximal length within manufacturing tolerance, for example N+0.4mm. The connectors 1, 101 are separated by the gap D3.

In Figure 3D, one electrical contact 113a‴ has minimal length, for example N-0.4mm, while the other electrical contact 113b‴ has maximal length, for example N+0.4mm. The connectors 1, 101 are separated by the gap D4.

In all four configurations shown, the electrical contacts 13a, 13b of the connector 1 have the same nominal length to facilitate illustration of the invention. However, deviations from nominal length in the contacts 13a, 13b of the connector 1 can be the corresponding manner by the invention as well.

In the example of Figures 3A and 2A, all contacts 113a, 113b, 13a, 13b have nominal length of N+/-0.0mm. The distal end surfaces 122a, 112b abut on the female mating surfaces 22a, 22b, and the contact pairs 13a-113a, 13b-113b are bottomed out on each other. As bottoming out occurs between the contact pairs 13a-113a, 13b-113b, the gap D1 between the terminal surface 14 of the inner shell 5 and the mating terminal surface 114 of shell 105 of the second connector 101 is present. This gap D1 has a nominal value larger than the tolerance of the connector length, here for example larger than 0.5mm.

As previously explained, the mating effort from the threading connection is transferred from outer shell 7 to the sleeves 25a, 25b, and from the sleeves 25a, 25b to the contacts 13a, 13b through the ledges 77a, 77b, until the contact pairs 13a-113a, 13b-113b are bottomed out on each other. As the shells 5, 105 are dimensioned to not bottom out on each other, the entire mating effort is transferred onto the mating contact surfaces 22a-122a, 22b-122b. Therefore, an allowance gap S1 between sleeves 25a, 25b and the insulation body 17, as well as an allowance gap S1' between sleeves 125a, 125b and the insulation body 117 is preserved at a nominal value, for example 0.2mm. The nominal allowance gaps S1, S1' allow for elastic movement of the insulation body with the contact sleeves 25a, 25b in according with the required length compensation, as explained with respect to Figure 3D. However, as relative movement or mechanical force occurs between the sleeves 25a, 25b and the insulation body 17, the allowance gap S1 does not change.

In Figure 3B, as the contacts 113a', 113b' have minimal length within manufacturing tolerance, the mating and coupling by screwing of the outer shell 7 proceeds further in mating direction x, and the user has to screw the outer shell 7 further until the electrical contact pairs 13a'-113a', 13b'-113b' abut. Nevertheless an abutment of the terminal surfaces 14, 114 of the mating shells does not occur. There is still a gap D2 between bottoming of the shell 105 on the inner shell 7 of the connector 1, even though said gap D2 smaller, for example of 0.1mm, than gap D1. As explained above, as the contact pairs 13a'-113a', 13b'-113b'are bottomed out evenly, the allowance gaps S1, S1' remain unchanged.

In Figure 3C, as the contacts 113a", 113b" have maximal length within manufacturing tolerance, the bottoming out occurs earlier and the mating and coupling by screwing, of outer shell 7 proceeds less far along mating direction x. Therefore, the gap D3 between bottoming of outer shell 7 on shell 105 of the second connector 101 is larger, here for example 0.9mm, than gap D1.

As the contact pairs are bottomed out evenly, the allowance gaps S1, S1' remain unchanged. Again, the bottoming occurs between the end surfaces of the electrical contacts 13a"-113a", 13b"-113b" and not the shells 5, 7 105.

In Figure 3D, the electrical contact 113a'" is shorter than the electrical contact 113b‴. Fretting corrosion building up from vibrations could thus occur if the contacts 13a‴ and 113a‴ are not bottomed out, i.e. are not held in abutment. The connector 1 according to this embodiment of the invention resolves this risk by providing the pivoting lever 49. The pivoting lever 49 shifts the positions of the contacts 13a‴, 13b‴ until all contact pairs 13a‴-113a‴, 13b‴-113b‴ are bottomed out.

In particular, once the longer male mating contact 113b'" abuts against the female electrical contact 13b‴, any further mating progression from continued screwing of the outer shell 7 on the shell 105 transmits a force to the lever 49. In particular, a force is provided on the fulcrum 51 by the pusher element 47 such that the lever 49 pivots around axis z, until the shorter contact pair 13a‴-113a‴ bottoms out as well. This is possible as the contact 13a and its sleeve 25a can move within the housing 3

The shifting of position of the contacts is accommodated by the allowances between insulation bodies 17, 117 and contact sleeves 25a, 25b. Therefore, in the contact configuration of Figure 3D, the gaps S2, S2' between "long" contact pair 13b‴-113b‴ and insulation bodies 17, 117 are increased by virtue of the pivoting of the lever 49. For example, the gaps S2, S2' are increased from 0.2mm to 0.4mm when the lever 49 tilts towards the "short" contact pair 13a‴, 113a‴, shifting relative positions of the contacts 13a‴, 13b‴ relatively to the housing 3.

At the same time, the gaps S3, S3' between the shorter contact 113a‴ and it's mating contact 13a‴ and insulation bodies 17, 117 are reduced, for example from 0.2mm to 0.0mm. On the "short" contact pair side, the allowance of 0.4mm is therefore consumed. Together with the increase of the size of the gaps S2, S2' in comparison with gaps S1, S1', the length difference of 0.8mm between contact 113a‴ and 113b‴ is accommodated, without the surfaces 14, 114 abutting. In other words, the contact pairs 13a‴-113a‴, 13b‴-113b‴ are fully bottomed out despite their contact lengths differences, as the contact lengths differences have been compensated by the pivoting lever 49, shifting the positions of the contacts 13a‴, 13b‴ relatively to the housing 3, an in particular relatively to the terminal surface 14 of the inner shell 5.

Thus, according to the invention a high-power connection with fretting corrosion resistance under vibrational load is achieved. The required resilience standards can be met without having to resort to fastened lug connections, as known from prior art. This allows for faster and simpler installation and maintenance, as well as greater safety as electrical conductors under high power are no longer exposed. Further, a greater power performance is achieved due to lower total connection mass and lower contact resistance. Further, higher voltage can be utilized and better electromagnetic compatibility with other vehicle equipment can be assured. Finally, and improved lifetime can be observed.

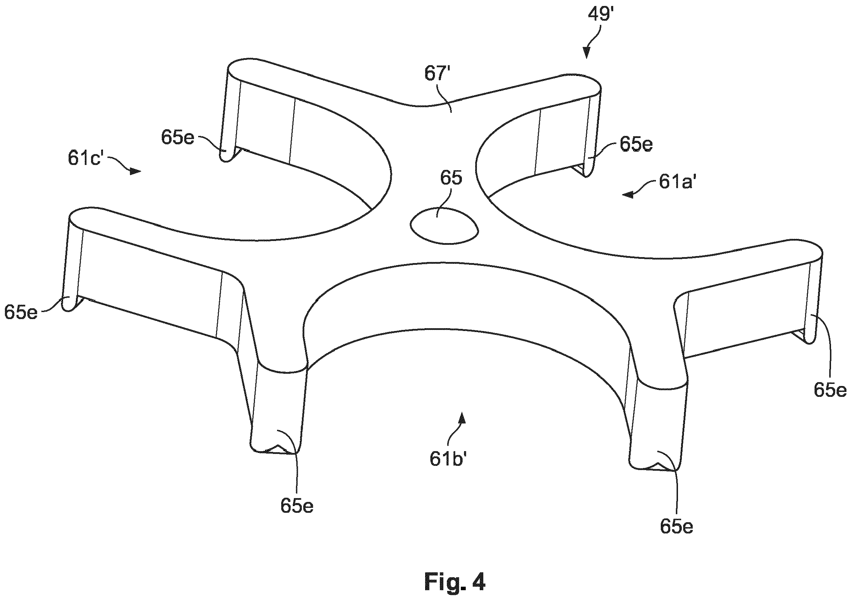

In further embodiments of the invention, the number of electrical contacts held by the electrical connector can be increased, for example to three. Figure 4 shows a lever 49' for an electrical connector according to an alternative embodiment of the invention, which is formed to accommodate a third contact sleeve, for example a third sleeve in addition to contact sleeves 25a, 25b. The lever 49' comprises the centrally protruding bulge 69 protruding from a top surface 67' and three hemicylindrical excavations 61a', 61b', 61c' which are evenly distributed around the bulge 69 to obtain a three-fold rotational symmetry. The hemicylindrical excavations 61a', 61b', 61c' are configured to accommodate three contact sleeves. The lever 49' further comprises respective load extremities 65e adjacent to each hemicylindrical excavations 61a', 61b', 61c'.

In this configuration, the lever does not pivot two-dimensionally in the x-y plane around an axis z, but can freely pivot around any axis three-dimensionally to accommodate length variations of the corresponding electrical contacts with respect to each other and the housing. This is possible because three electrical contacts of different lengths can define a plane between the three centre points of their distal end surfaces. To accommodate the movement of the three-dimensional pivoting of the lever and the three corresponding contact sleeves, the corresponding pusher element can be formed for example in a Y-shape in the y-z plane, instead of a crossbeam as shown in Figure 2B.

In order to accommodate even more contacts, further alternative embodiments can provide for additional levers layered under the lever 49 such that the additional lever's bulges are located under load extremities 65a-65d of the lever 49. In such a "cascading arrangement", the self-adjusting nature of the electrical contacts in the connector can be preserved.

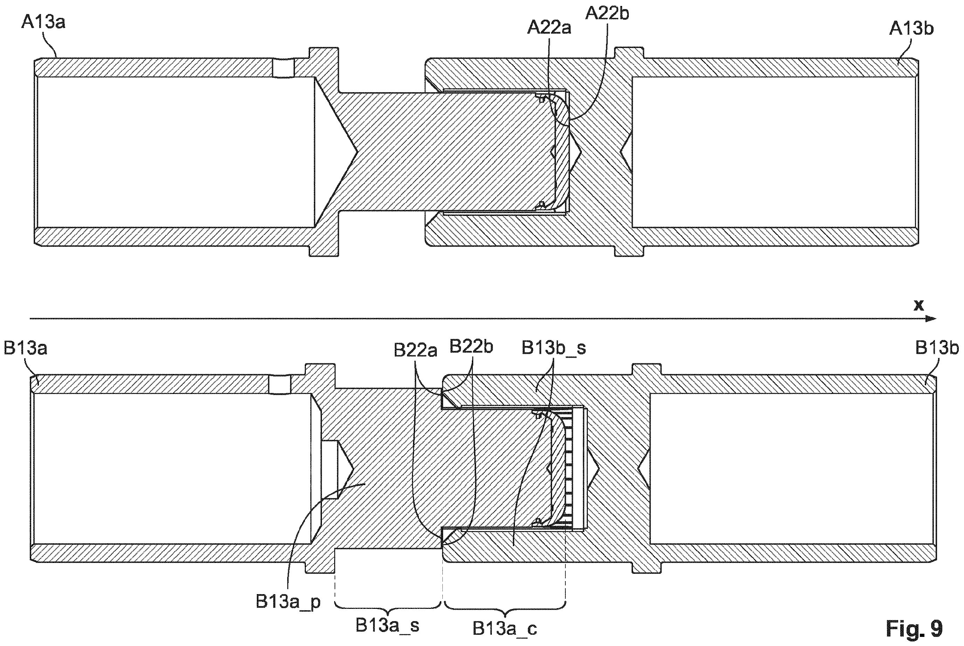

The embodiments described here-above with respect to a first aspect of the invention, as well as the described embodiment of a method according to the invention, relate to the abutment of distal end surfaces of electrical contacts, notably the mating distal end surfaces 22a-122a, 22b-122b, and E22b, E122b. It will become clear in light of the description of Figure 9 that the invention can be achieved with any mating terminal end surfaces, and is not limited to the abutment of distal end surfaces of electrical contacts.

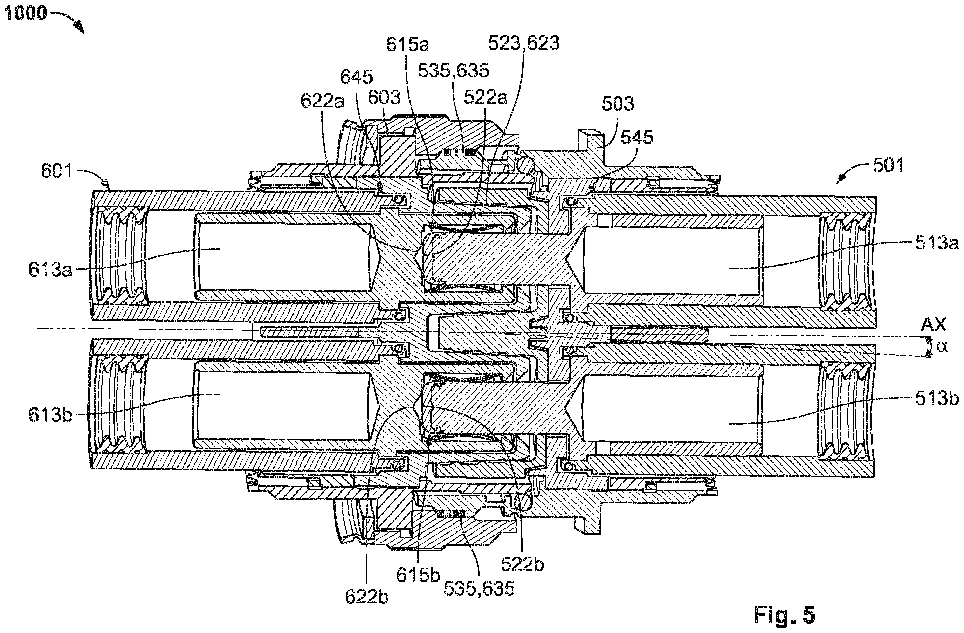

An embodiment of a second aspect of the invention will be described with reference to Figure 5. Figure 5 shows a connector assembly 1000, comprising a first electrical connector 501 and a second electrical connector 601 mated along the mating axis AX. In Figure 5, the connectors 501, 601 are in a fully mated state.

The connector assembly 1000 does not comprise, use or resort to lug connections and is thus lug-free. Further, the connector assembly 1000 is designed with insulation and conductance specific to high power applications using currents of 50A or above, in particular specific to currents between 50A and 1000A.

The first connector 501 comprises a first housing 503 defining an internal connector space 545 and the second connector 601 comprises a second housing 603 defining a second internal connector space 645.

The first electrical connector 501 comprises two first electrical contacts 513a, 513b housed in the internal connector space 545. The contacts 513a, 513b are mated with corresponding electrical contacts 613a, 613b of the second connector. In the embodiment of Figure 5, connector 601 is a mobile connector and has female electrical contacts 613a, 613b. The connector 601 is configured to be screwed on the fixed connector 501 having male electrical contacts 513a, 513b. The arrangements could, according to a variant, also be reversed with the male contacts being with the mobile connector and the female contacts with the fixed connector. In this embodiment, the first and second electrical connector 501, 601 have a threading arrangement on surfaces of housing shells as already described in reference to connectors 1, 101 described in relation to the first aspect. In particular, the first connector 501 has a screw threading 535 and the second connector 601 has a nut threading 635. As mentioned above other types of connection securing means can be employed as well.

The distal end surface 522a, 522b of each of the first electrical contacts 513a, 513b abuts against the respective mating surface 622a, 622b of the receptacles 615a, 615b of the mating corresponding electrical contact 613a, 613b. In addition, the mutual facing surfaces 523, 623 of the housings 503, 603 also abut. The distal end surfaces 522a, 522b are the frontal end surfaces of the electrical contacts that are configured for electrical contacting and electrical power transmission, in particular by means of a planar surface engagement. For example, the planar surface engagement is perpendicular to the mating direction x.

In this example, contact 513a is longer than contact 513b, by a length difference within manufacturing tolerance, for example longer of 0.5mm. This length difference is thus not visible on Figure 5, but present nonetheless and represents a fretting corrosion risk factor under vibrational load. Therefore, during mating and coupling of the connector 601 with the connector 501 by screwing as described in the previous aspect, the contact surfaces 522a and 622a abut first.

When the mating and coupling of the housings 503, 603 is continued after the first abutment of the contact surfaces 522a, 622a, the housing 501 tilts relatively to the housing 503 with respect to the mating axis AX towards the side of the shorter contact 513b.

This tilting is represented in an exaggerated form on Figure 5 by the angle a. The tilting by an angle α is enabled and mechanically secured by thread allowances between a first thread 535 of the first electrical connector 501 and a second thread 635 of the second connector 601. Due to the tilting by angle a, the abutment of the mutual facing surfaces 523, 623 of the housings 503, 603 is released on the side from which the housing 503 tilts away, and surfaces 523, 623 only partially abut.

The tilting of the first housing 503 moves the shorter electrical contact 513b forward until its distal end surface 522b abuts against the mating surface 622b of the respective corresponding contact receptacle 615a. In particular, the tilting of the first housing 503 allows for the second abutment at surfaces 522b, 522b to be achieved while keeping surfaces 522a, 522b abutted as well.

Thus, the abutment of all electrical contact pairs 513a-613a, 513b-613b is secured by a tilted arrangement of the first housing 503 relatively to the mating second housing 603 with respect to the mating axis AX.

Thread allowances in the threadings 535, 635 allow for the tilting of the first housing 603 relatively to the second housing 503 along the mating axis AX without damaging the housings 503, 603 or endangering mechanical security of the connection. In particular, the thread allowances limit tilting to a predetermined maximal angular displacement depending on the thread allowance first and second threadings 535, 635.

The lug-free assembly 1000 allows for divergence in electrical contact lengths within manufacturing tolerances to be compensated by the tilting of the first connector housing 503 relatively to the second connector housing 603.

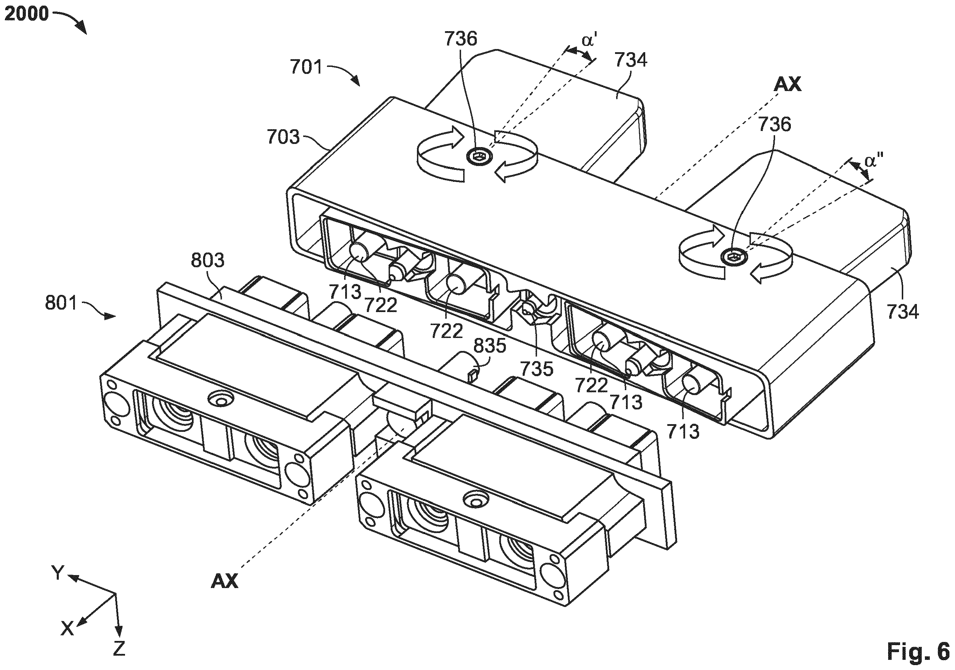

Another embodiment of the second aspect of the invention is described with reference to Figure 6. Figure 6 provides a perspective view a first connector 701 and a second connector 801 of a lug-free electrical connector assembly according to the invention, which is suitable for high power applications using currents of 50A and higher. The first connector 701 is an electrical plug connector and the second connector 801 is an electrical receptacle connector. The first connector 701 and the second connector 801 are configured to be mated but are yet unassembled together in the view of Figure 6.

The first electrical connector 701 has a first housing 703 and the second electrical connector 801 has a mating second housing 803. In this embodiment, the second connector 801 is a fixed connector and the first connector 701 is a mobile connector.

The housings 703, 803 of the first and of the second electrical connectors 701, 801 have a rectangular shape in a y-z plane orthogonal to the mating axis AX. In contrast to the above-described connectors 501, 701, the first housing 703 comprises a threaded plug 735 and the second housing 803 comprises a threaded receptacle 835. The mating and coupling thus occurs not by screwing of external shells, as for example described with respect to connectors 1, 101, but by screwing of a threaded central plug.

The first electrical connector further comprises four male electrical contacts 713 housed in the housing 703 and configured to be mated with mating female electrical contacts. In particular, the distal end surfaces 722 are configured to be abutted against respective mating surfaces of the corresponding electrical contacts.

The threaded plug 735 and threaded receptacle 835 extend centrally in their respective housings 703, 803 and the plug 735 is configured to be matched with the receptacle 735 during mating. In particular, to mate the connectors 701, 801, the housings 703, 803 are mated such that the plug 735 is inserted in the receptacle until the threads grip. Then, the threaded plug 735 is manually screwed with the receptacle 835.

The contacts 713 are distributed two-by-two in tilting elements 734 housed in the housing 703. In particular, the tilting elements 734 are tiltably arranged in the housing 703 by being connected to hinges 736 such that they can tilt around respective tilt axes parallel to the direction z orthogonal to the mating direction x. For example, the tiling elements 734 can tilt in the housing 703 around hinges 736 by the illustrated angles a', a".

The tiltable arrangement allows for a compensation of contact lengths differences, as already described with respect to previous arrangements: When a first contact bottoming occurs and the mating, for example by screwing plug 735 in receptacle 835, progress, the tiltable arrangement around hinges 736 allows the tilting elements 734 to tilt until a second bottoming is achieved. Thus, the bottoming of all contact pairs is achieved before the housings 703, 803 are bottomed out and the risk of fretting corrosion is reduced or cancelled.

In further alternative embodiment of the second aspect, the first electrical connector can be an electrical connector described with respect to the first aspect of the invention, for example connector 101 of Figure 1B. In another alternative embodiment, the second electrical connector can be a mating connector described with respect to the first aspect of the invention, in particular Figure 1A. In a further alternative embodiment, both the first connector and the second connector can be connectors 1 and 101 of the first aspect, as illustrated in Figure 1C.

Thus, according to the invention a high-power connector assembly with fretting corrosion resistance under vibrational load is achieved. The required resilience standards can be met without having to resort to fastened lug connections, as known from prior art. This allows for faster and simpler installation and maintenance, as well as greater safety as electrical conductors under high power are no longer exposed. Further, a greater power performance is achieved due to lower total connection mass and lower contact resistance. Further, higher voltage can be utilized and better electromagnetic compatibility with other vehicle equipment can be assured. Finally, and improved lifetime can be observed.

The embodiments described here-above with respect to a second aspect of the invention relate to the abutment of distal end surfaces of electrical contacts, notably the mating distal end surfaces 522a-622a, 522b-622b and 722. It will become clear in light of the description of Figure 9 that the invention can be achieved with any mating terminal end surfaces, and is not limited to the abutment of distal end surfaces of electrical contacts.

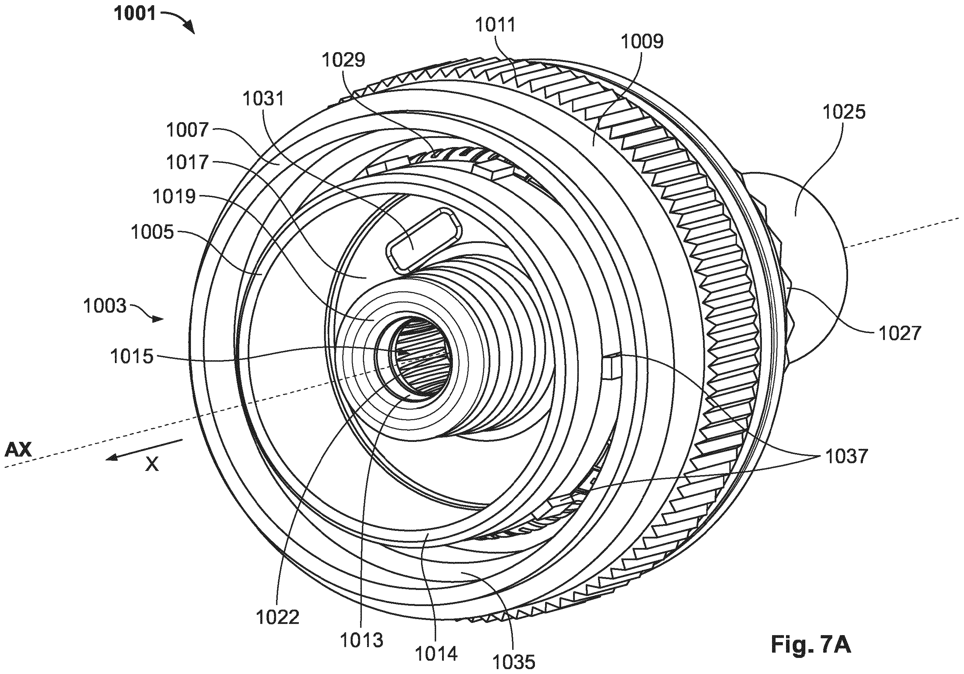

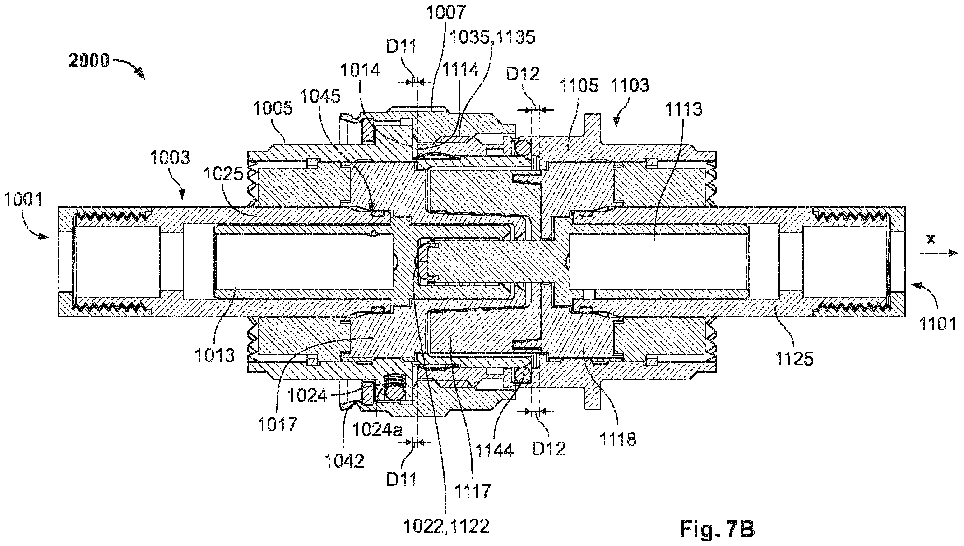

An embodiment of a lug-free connector assembly according to a third aspect of the invention will now be described with references to Figures 7A and 7B.

Figure 7A shows a perspective view of a first electrical connector 1001 for a lug-free connector assembly according to an embodiment of the third aspect of the invention. The first electrical connector 1001 shares many structural elements with the electrical connector 1 illustrated in Figure 1A in relation to the first embodiment of the invention.

In particular, the first electrical connector 1001 is configured to be mated in the mating direction x parallel to the mating axis AX with a mating second electrical connector, for example the second electrical connector 1101 illustrated in Figure 7B. The electrical connector 1001 is also mobile connector, also called plug connector, to be manually mated with a fixed, or immobile, mating second connector also called receptacle. For example, the electrical connector 1001 is suited to establish power transmission connection for a power cable in an electrical vehicle, e.g. an electrical aircraft.

The electrical connector 1001 also comprises a housing 1003, including an inner shell 1005 with a shell terminal surface 1014, and surrounded by an outer shell 1007 having an outermost surface 1009 and a rugged surface portion 1011. The shell terminal surface 1014 is furthest, or outermost, surface or ridge of the connector 1001 in the direction of the mating with the mating connector, that is, in the mating direction x.

The electrical connector 1001 further comprises an interfacial thermoplastic insulation body 1017 with a protrusion 1019, centring keys 1037 provided on the outer surface of the inner shell 1005, a jagged outer circumferential ridge 1027 on the outer shell 1007 and a metallic band 1029 between the shells 1005, 1007. The connector 1001 also comprises a threaded surface portion 1035. The threaded surface portion 1035 is a nut thread realizing a mechanical coupling device for the coupling of the connector 1001 with a mating second electrical connector. In variants of the invention, other mechanical coupling devices can be used, such as friction-fit devices or clipping devices.

However, in contrast to the other embodiments, he electrical connector 1001 only comprises only one electrical socket contact 1013 located inside the inner shell 1005, extending inside the housing 1003 in parallel to the mating axis AX. The contact 1013 comprises a receptacle 1015 configured to receive a male contact of a mating second connector. The receptacle 1015 of the contact 1013 matches an opening 1021 in the insulation body 1017. The receptacle 1015 comprises an end surface 1022 representing the primary electrical power contacting surface of the electrical socket contact 1013.

The electrical socket contact 1013 is held in a hollow contact sleeve 1025 used to fit and lock the electrical contact 1013 in the housing 1003. In addition, the connector 1001 comprises a safety pin 1031 that is moveable between a safe and an unsafe position. In the view of Figure 7A, the electrical contact 1013 and the contact sleeve 1025 is fully locked in the housing 1003, which is indicated by the safety pins 1031 that are in a safe position, in which the pin 1031 is fully retracted inside the housing 1003. In case, for example, either the sleeve 1025 or the contact 1013 is incorrectly assembled in the housing 1003, the safety pin 1031 moves into an unsafe position in which the pin 1031 protrudes from the housing 1003 in the mating direction x of the respective mating connector, for example the second electrical connector 1101. In the unsafe position, the protruding safety pin 1031 prevents mating of the connector 1001 with a mating electrical connector.

Figure 7B shows in a cross-sectional view the lug-free connector assembly 2000 comprising the connector 1001 of Figure 7A, and a second electrical connector 1101. The view of Figure 7B relates to a single-contact lug-free connector assembly and corresponds to the views illustrated in Figures 2A and 5 relating to double-contact connector assemblies. The internal configuration of the connectors 1001, 1101 matches the internal configurations of the connectors described with respect to previously described aspects, but simplified to comprise only a single electrical contact.

In particular, the connector 1001 is mated with the second electrical connector 1101 by screwing together of the nut thread 1035 of the first housing 1003 with a plug thread 1135 formed on a shell 1105 of the second housing 1103 of the second electrical connector 1101. In alternative embodiments, the connector 1001 and the second electrical connector 1101 can be coupled by a mechanical coupling means different from the threads 1035, 1135. For example, other friction fit and/or form fit mechanical coupling means for the coupling of connectors 1001, 1101 may be used, such as snap-fit clipping devices.

As shown in Figure 7B, the first housing 1003 of the first electrical connector 1001 defines an internal connector space 1045 and houses the contact sleeve 1025 holding the electrical contact 1013. Correspondingly, the second housing 1103 houses the corresponding electrical contact 1113. The second housing 1103 also houses an insulation body 1117, for example an elastomer, mating the insulation body 1017 of the first connector 1001. A secondary insulation layer 1118 in the second housing 1103 provides additional contact fitting and insulation properties. An O-ring 1144 on an inside of the shell 1105 of the second connector 1101 provides additional sealing for the coupling with the first connector 1001. As described with respect to first aspect, a frictional ring 1042 is disposed circumferentially around the inner shell 1005 such that it is in partial frictional contact with the outer shell 1007 and secures the rotational state of the outer shell 1007 with respect to the inner shell 1005.

As the contact 1013 is an electrical socket or female contact, the corresponding electrical contact 1113 is a male contact. As already known from the embodiment of the first aspect described with reference to Figures 1A to 2D, the corresponding electrical contact 1113 is removably form-fit in a contact sleeve 1125, which in turn is removably form-fit in the housing 1101.

Figure 7B shows an assembly of the first electrical connector 1001 and the second electrical connector 1101 in a fully mated and coupled state, in which the distal end surface 1022 of the first electrical contact 1013 abuts against the respective mating male distal end surface 1122 of the corresponding electrical contact 1113. The distal end surfaces 1022, 1122 are the frontal end surfaces of the electrical contacts that are configured for electrical contacting and electrical power transmission, in particular by means of a planar surface engagement. For example, the planar surface engagement is perpendicular to the mating direction x. For example, in the case of a female electrical contact such as contact 1113, the distal end surface is the bottom surface of the contact receptacle 1115.

In particular, the distal end surfaces 1022 and 1122 abut while the first and second housing 1003, 1103, mated through the threaded portions 1035, 1135, are not bottomed out against each other. This can be achieved for example by dimensioning the nominal lengths of the contacts 1013, 1113, and their fittings in the housings 1003, 1103 such that the shell terminal surface 1014 of first housing 1003 the first electrical connector 1001 does not abut against its respective shell terminal surface 1114 of the second housing 1103 of the second electrical connector 1101.

Instead, while the distal end surfaces 1022, 1122 of the contacts are bottomed out against each other, the shell terminal surfaces 1014, 1114 are separated by a distance D11. Similarly, the inner shell 1005 of the housing 1003 of the first electrical connector 1001 is not bottomed out in mating direction x on a surface of the housing 1103 of the second electrical connector 1101, but still separated by a distance D12. Alternative extremity surfaces of the housings 1003, 1103 in mating direction x are also still separated by a distance D12, as shown in Figure 7B. Thus, in the same fashion as previously described aspects, the bottoming out of the connectors is transferred from the housings 1003, 1103 to the contacts 1013, 1113, in particular the contacting end surface 1022 and distal end surface 1122. The bottomed-out contacts 1013, 1113 are thus less subject to vibration-induced relative motion and fretting corrosion is reduced or eliminated.

Figure 7B also illustrates an anti-decoupling device 1024. The anti-decoupling device 1024 is arranged in a portion of the inner shell 1005 of the housing 1003 such that a spring-actuated ball lock 1024a of the anti-decoupling device 1024 abuts against the outer shell 1007. It maintains the outer shell 1097, in particular when the ball enters a corresponding recess in the outer shell 1007, statically place in a given rotational state with respect to the inner shell 1005 and thus prevents an unwanted decoupling.

The embodiments described here-above with respect to a third aspect of the invention relate to the abutment of distal end surfaces of electrical contacts, notably the mating distal end surfaces 1022-1122. It will become clear in light of the description of Figure 9 that the invention can be achieved with any mating terminal end surfaces, and is not limited to the abutment of distal end surfaces of electrical contacts.

A tool and a method for removing a contact sleeve 125 from the electrical connector 101, will now be described with reference to Figure 8. The inventive concept of removal of a contact sleeve 125 from the electrical connector can also be realized for any kind of electrical connector, in particular an electrical connector for high-power vehicle applications, independent of the connectors described above with respect to Figures 1 to 7.

Figure 8 shows a partial cut view of the second connector 101 described previously according to a first aspect of the invention. The second connector 101 has already been described in detail with respect to Figures 1B, 1C, 2A, 2D and 3A to 3D, in particular with respect to Figure 1B. Features carrying reference numbers already used will not be described in detail again but reference is made to their description above.

Figure 8 corresponds to an off-centre cross-sectional view of the connector 101, that is, a cross-sectional view laterally removed from the mating axis Ax corresponding to the centre axis of the connector 101 to visualize internal components.

In addition to the second connector 101, Figure 8 also represents an external sleeve removal tool T1. The sleeve removal tool T1 comprises a first cylindrical portion T3 and a second cylindrical portion T5, formed together in one part. The second portion T5 extends coaxially from the first portion T3. The first portion T3 has a larger, in particular two to four times larger, diameter than the second portion T5.To facilitate manual gripping and handling of the tool T1, the diameter of the second portion T5 is adapted for insertion in a corresponding opening 128b arranged in the second connector 101.

In alternative embodiments, to further facilitate the gripping of the second portion T5, the enlarged second portion T5 can for example be key-shaped or cuboid instead of cylindrical.

The opening 128b is arranged adjacent to the position of the contact sleeve 125b, in particular in the backside cover 143. The opening 128b has a diameter than is more than five times, in particular more than 10 times smaller than the diameter of the contact sleeves 125b.

The sleeve removal tool T1 is needed to allow the removal of an electrical contact sleeve 125b for an electrical contact in the electrical connector 101. The sleeve removal tool T1 is insertable in a corresponding opening 128b and to displace a safety pin 131b as described in one of the aspects of the present disclosure, e.g. in Figure 1B.

The pin 131b is moveable between a safe and an unsafe position, wherein in the unsafe position the safety pin protrudes outside the connector 101 away from the insulation body 117 and prevents the mating of the connector 101 with the electrical connector 1, like illustrated in Figure 1C.

In Figure 8 the safety pin 131b is moved in the safe position, in which the safety pin 131b is fully retracted inside the connector 101. The safety pin 131b extends throughout the second connector 101, in particular through cut-out spaces in the elastomer insulation body 117, the secondary thermoplastic insulation body 118 and the backside cover 143. As already described in the foregoing with respect to Figures 1A to 2D, as the safety pin 131b is retracted, it does not protrude from the connector 101 and thus does not block a mating and/or coupling of the connector 101 with the mating electrical connector 1 anymore.

The safety pin 131b has an L-shaped body, with the long arm 132a of the body extending along the mating axis Ax through the second connector 101. The short arm 132b is disposed orthogonally to the mating direction x on a side of the connector 101 facing in mating direction x. The extremity 132c of the short arm 132b extends into the space formed by the opening 128b. Thus, the extremity 132c of the safety pin 131b can be engaged by the insertion of an object, in particular by an insertion of the second portion T5 of the tool T1, into the opening 128b.

As mentioned in the foregoing description of the first aspect of the invention in Figures 1A to 3D, the second connector 101 comprises a spring arrangement. In particular, as shown on Figure 8, the connector 101 comprises a spring element 134 lodged inside a spring space 136. In this embodiment, the spring element 134 is a helical coil spring arranged in parallel to the mating axis Ax, that is, such that the restoring spring force FS is directed in parallel to the mating axis Ax.

A first end 134a of the spring element 134 is abutting against the connector 101, in particular to the secondary thermoplastic insulation body 117. A second end 134b of the spring element 134 is abutting against the extremity 132c of the short arm 132b of the safety pin 131b. In this spring arrangement, the spring element 134 is pre-loaded such that a spring force FS acts on the extremity 132c of the safety pin 131b and pushes it in mating direction x along the mating axis Ax against the cover 149 of the connector 101.

The retracted safety pin 131b blocks the sleeve 125b from being rotated, for example due to an unwanted manually or environmental action, around its central axis A125B. The blocking of the rotation of the sleeve 125b around its axis A125B in the safe position is obtained by virtue of the shearing protrusion 73b, whose structure and function are described in detail above with reference to Figure 2C but is not visible on Figure 8. The shearing protrusion 73b protrudes from the outward facing surface 38b, and therefore, a rotation of the sleeve 125b around its axis A125B is blocked when the shearing protrusion 73b hits the retracted safety pin 131b.

To remove the contact sleeve 125b, for example to check, maintain or exchange the fitted electrical contact 113b, the second portion T5 of the sleeve removal tool T1 is introduced into the opening 128b. As the removal tool T1 is pushed into the opening 128b with at least a predetermined force FT, the restoring spring force FS can be overcome and the safety pin 131b is displaced along the mating axis from the safe position, into an unsafe position in which the safety pin 131b protrudes outwardly from the interfacial surface 123 from the second connector 101.

In the unsafe position, the contact sleeve 125b can be rotated around its axis A125b such that the shearing protrusion 73b moves out of its position in a recess inside the connector and is no longer blocked by the long arm 132a of the safety pin 131b. In particular, the contact sleeve 125b can be rotated into a position in which the contact sleeve 125b can be extracted from the connector 101 by passing the shearing protrusion 73b through a corresponding guiding space 174a, 174b in the connector 101.

Conversely, in an unsafe position, the contact sleeve 125b is not rotated around its axis A125b into its correctly locked position. Thus, the shearing protrusion 73b is not rotated with the contact sleeve 125b into its final place but remains at least partially in the guiding space 74b, blocking the spring-actuated upward movement of the outwardly extended safety pin 131b to retract back into the connector 101.

In this fashion the arrangement of the safety pin 131b can prevent a mating of the connector 101 with a mating connector 1 as long as the contact sleeve 125b is not correctly installed in the intended rotational position around its central axis A125B.

The same mechanism can be foreseen for the second contact sleeve 125a, which is also removably arranged.

A corresponding mechanism, in particular a corresponding spring and through hole, can be arranged on the other side, on Figure 8 not visible side of the connector 101, concerning the other safety pin 31a and contact sleeve 25a.

The method and structural features described here above with respect to the second connector 101 of the first aspect of the invention can be applied in identical fashion to any other connector, in particular to connector 1 according to the present invention.

Figure 9 shows a comparative view of an alternative pair of electrical contacts. In particular, Figure 9 shows side-by-side a first pair of electrical contacts A13a-A13b, corresponding to the electrical contact pairs 13a-13b, 113a-113b, 513a-513b, 613a-613b, 1013-1113 as described above, and, as an alternative, a second pair of electrical contacts B13a-B13b.

The electrical contact A13a is a plug-type electrical contact and the other electrical contact A13b is a receptacle-type electrical contact. In Figure 9, the mating electrical contacts A13a, A13b bottom out at their respective terminal end surfaces A22a, A22b. Here, the distal end surface A22a abuts against the bottom of the female receptacle corresponding the terminal end surface A22b.

However, the invention is not limited to this type of connector. The electrical contacts B13a, B13b of Figure 9 illustrate an alternative. In the alternative, the electrical contact B13b corresponds to the electrical contact A13b and is a receptacle-type electrical contact, and the electrical contact B13a is still a plug-type electrical contact.

The plug B13a_p of the contact B13a has a central protruding portion B13a_c encircled by a retracted portion B13a_s, which does not extend as far in the mating direction x as the protruding portion B13a_c. Here, the retracted portion B13a_s abuts with and bottoms out on the distal end surface B22b of the receptacle shell B13b_s of the receptacle contact B13b. Thus, in this embodiment, it is a distal end surface B22b of the electrical contact B13b that abuts against the terminal end surface B22a of the retracted portion B22_s of the electrical contact B13a.

In the example of Figure 9, the surfaces A22a, A22b and B22a are planar and orthogonal to the mating direction x. However, the mating terminal end surfaces of the electrical contacts may also be inclined with respect to that mating axis x.

Although each aspect of the invention has been described in relation to particular examples, the invention is not limited the described embodiments, and numerous alterations to the disclosed embodiments can be made without departing from the scope of this invention. The individual features included in the various embodiments can be freely combined with each other to obtain further embodiments or examples according to the invention.

### Reference numerals

1 connector
3 housing
5 inner shell
7 outer shell
9 outermost surface
11 rugged surface portion of the outermost surface
13a, 13b electrical socket contacts
14 terminal surface of the outer shell of the connector
15a, 15b receptacles of the electrical socket contacts
17 insulation body
19a, 19b protrusions in the insulation body
21a, 21b openings in the protrusions in the insulation body
22a, 22b female mating surfaces
23 interfacial surface of the insulation body
25a, 25b contact sleeves
26a, 26b internal hollows of the sleeves
27 jagged ridge
29 metallic band
31a, 31b safety pins
33 shell interspace
35 threaded surface portion
37 centering keys
38a, 38b outward facing surface of contact sleeves
39b wiring receptacle
41a, 41b triple barrier grommets
42 frictional ring
43 backside cover
45 internal connector space
47 pusher element
49, 49' lever
51 fulcrum
53 crossbeam of the pusher element
55a, 55b lateral arms of the pusher element
57a, 57b outward surfaces of the lateral arms
59a, 59b indentations on the lateral arms
61a, 61b, 61a', 61b', 61c' hemicylindrical excavations
63a-63d lever arms
64a, 64b, 64c peripheral cut-outs in the hemicylindrical excavations
65a-65d load extremities
65e load extremities of a lever in a three-contact embodiment
67, 67' top surfaces
69 bulge
71a, 71b shearing portions
73a, 73b shearing protrusion
75a, 75b load surfaces
77a ledge inside the sleeve
79a protrusion on the contact 13a
81a, 81b through holes to the wiring receptacles
83a, 83b recess
101 second connector
103 housing of the second connector
105 shell of the second connector
107 baseplate
109 outermost surface of the shell of the second connector
111 through holes
113a, 113b corresponding male electrical contacts
113a', 113b' corresponding male electrical contacts with minimal lengths
113a", 113b" corresponding male electrical contacts with maximal lengths
113a‴, 113b‴ corresponding male electrical contacts with uneven lengths
114 mating terminal surface of the shell of the second connector
117 insulation body of the second connector
118 secondary insulation layer
119a, 119b hollows
121a, 121b hollow openings
122a, 122b distal end surfaces
123 mating interfacial surface
125a, 125b contact sleeves
127 jagged ridge
128b through hole
129 circumferential surface of the insulation body
131a, 131b safety pins
132a long arm
132b short arm of the safety pin
132c extremity of the short arm of the safety pin
134 spring element
134a, 134b first and second end of the spring element
136 spring space
133 annular interspace
135 threaded surface portion of the second connector
137 centering dents
141a, 141b triple barrier grommets
143 backside cover
145 internal space
147 pusher element
149 lever
174a, 174b guiding spaces for the shearing protrusions
200 connector assembly
501 first electrical connector
503 first housing
513a, 513b first electrical contacts
522a, 522b distal end surfaces of the first electrical contacts
523 interfacial surface of the first electrical connector
535 screw threading of the first connector
601 second electrical connector
603 second housing
613a, 613b second electrical contacts
615a, 615b receptacles of the second electrical contacts
622a, 622b mating surfaces of the second electrical contacts
623 interfacial surface of the second electrical connector
635 nut threading of the second connector
701 electrical plug connector
703 housing
713 electrical contacts
722 male mating surfaces of the contacts
735 threaded plug
736 hinges for the tilting elements
801 electrical receptacle connector
803 housing for the connector
835 threaded receptacle
1001 first electrical connector according to an embodiment of a third aspect of the invention
1003 first housing
1005 inner shell of the first housing
1007 outer shell of the first housing
1009 outermost surface of the outer shell
1011 rugged surface portion of the outermost surface
1013 electrical socket contact
1014 shell terminal surface
1015 electrical socket contact receptacle
1017 thermoplastic insulation body
1019 protrusion of the insulation body
1022 distal end surface of the electrical contact
1025 first contact sleeve
1027 jagged ridge
1029 metallic band
1031 first safety pin
1035 threaded surface portion
1037 centering keys
1042 frictional ring
1045 internal connector space
1101 second electrical connector according to an embodiment of a third aspect of the invention
1103 second housing
1105 shell of the second housing
1113 corresponding electrical contact
1114 shell terminal surface
1117 elastomer insulation body
1118 thermoplastic secondary insulation layer
1122 distal end surface
1024 anti-decoupling device
1024a ball lock of the anti-decoupling device
1125 second contact sleeve
1135 threaded surface portion
1144 sealing O-ring
2000 lug-free connector assembly according to an embodiment of a third aspect of the invention
x mating direction
y, z: orthogonal plane axes
AX mating axis
A125B central axis of the contact sleeve 125b
A13a, A13b mating pair of conventional electrical contacts
A22a, A22b mating terminal end surfaces
B13a, B13b mating pair of alternative electrical contacts
B13a_c central protruding portion of the electrical contact
B13a_p plug of the electrical contact
B13a_s retracted portion of the electrical contact
B13b_s receptacle shell of the electrical contact
B22a, B22b mating terminal end surfaces of electrical contactsC1 counterforce
D1, D2, D3, D4 housing gaps according to different contact length configurations
D11, D12 housing gaps in an embodiment according to the third aspect of the invention
E1, E101 connectors in the method of connecting
E13a, E13b, E113a, E113b contacts in the method of connecting
E22b, E122b mating surfaces of electrical contacts
E149 lever
F mating force
FS spring force
FT tool force
S1, S1'allowance gaps between insulation bodies and sleeves in nominal conditions
S2, S2'allowance on long side in uneven conditions
S3, S3'allowance on short side in uneven conditions
T1 sleeve removal tool
T3 first portion of the sleeve removal tool
T5 second portion of the sleeve removal tool
N nominal length
a, a', a" tilting angles
Δ length difference

## Claims

1. Electrical connector (1)configured to be mated with a second electrical connector (101) in a mating direction (x) parallel to a mating axis (AX), comprising
a housing (3) defining an internal connector space (45) and configured to be mated with a mating housing (103) of the second connector (101), and
at least two electrical contacts (13a, 13b) housed in the internal connector space (45) and configured to be mated with corresponding electrical contacts (113a, 113b) of the second connector (101),
**characterized in further comprising**
a lever (49) housed in the internal space (45) such that the mechanical contact between the housing (3) and the lever (49) establishes a fulcrum (51) of the lever (49),
wherein the fulcrum (51) is positioned such that it is arranged between the at least two electrical contacts (113a, 113b),
the lever (49) being furthermore arranged and configured such that a pivoting of the lever (49) moves the position of the at least two electrical contacts (113a, 113b) relatively to the housing (3).

2. Electrical connector (1) according to claim 1, the housing (3) further comprising a shell (5) and pusher element (47), the pusher element (47) being disposed in the internal space (45) and rigidly attached, in particular form fit, to the shell (5) of the housing (3),
wherein the pusher element (47) realises the mechanical contact between the housing (3) and the lever (49) at the fulcrum (51).

3. Electrical connector (1) according to claim 1 or claim 2, wherein the lever (49) is configured such that a pivoting of the lever (49) moves the position of the at least two electrical contacts (13a, 13b) relatively to the housing (1) translationally along the mating axis (AX).

4. Electrical connector (1) according to any one of claims 1 to 3, wherein the lever (49) comprises a protrusion (69), in particular a hemispherical protrusion or bulge, protruding from a surface (67) of the lever (49) in a direction opposed to the mating direction (x), wherein the extremity of the protrusion (69) is the point of mechanical contact with the housing (3) establishing a fulcrum (51).

5. Electrical connector (1) according to any one of claims 1 to 4, wherein each electrical contact (13a, 13b) is held, in particular form and/or friction-fitted, in a corresponding contact sleeve (25a, 25b), each contact sleeve (25a, 25b) comprising externally at least one shearing portion (71a, 71b), the shearing portion (71a, 71b) being configured to establish a mechanical contact with the lever (49).

6. Electrical connector (1) according to claim 5, wherein the shearing portion (71a, 71b) comprises a protrusion (73a, 73b) having a load surface (75a, 75b) facing in the direction opposed to the mating direction (x) , wherein the load surface (75a, 75b) is configured to receive a mechanical load from the lever (49).

7. Electrical connector (1) according to claim 6, wherein each load surface (75a, 75b) of the respective contact sleeves (25a, 25b) abuts against a respective load extremity (65a-65d) of the lever (49).

8. Electrical connector (1) according to claim 7, wherein the load extremities (65a-65d) of the lever (49) rest freely on the respective load surfaces (75a, 75b) of the sleeves (25a, 25b), thereby enabling a sliding movement of the load extremities (65a, 65b) on the load surfaces (75a, 75b).

9. Electrical connector (1) according to any one of claims 1 to 8, further comprising at least one safety pin (31a, 31b) that is moveable between a safe and an unsafe position, wherein in the unsafe position the safety pin (31a, 31b) is configured to prevent the mating of the connector (1) with the second electrical connector (101), in particular by protruding from the housing (3) in the mating direction (x) and blocking the second electrical connector (101).

10. Electrical connector (1) according to any one of claims 5 to 9, further comprising for each contact sleeve (25a, 25b) one corresponding safety pin (31a, 31b), each safety pin (31a, 31b) being moveable between a respective safe and a respective unsafe position, wherein in the unsafe position each safety pin (31a, 31b) is configured to prevent the mating of the connector (1) with the second electrical connector (101), in particular by protruding from the housing (3) in the mating direction (x) and blocking the second electrical connector (101).

11. Electrical connector assembly (200) comprising an electrical connector (1) according to any one of claims 1 to 10, and a second connector,
the second connector (101) comprising a mating housing (103) configured to be mated with the housing (3) of the electrical connector (1), and corresponding electrical contacts (113a, 113b) configured to be mated with the electrical contacts (13a, 13b) of the electrical connector (1),
wherein the lever (49) is pivoted around the fulcrum (51) such that each contact (13a, 13b) is bottomed out against its respective corresponding electrical contact (113a, 113b).

12. Lug-free electrical connector assembly, in particular for high power applications using currents of 50A and higher, comprising a first electrical connector (501), in particular an electrical connector (1) according to one of claims 1 to 10, mated with a second electrical connector (101) along a mating axis,
the first electrical connector (501) comprising a first housing (503) defining an internal connector space (545) mated with a mating second housing (603) of the second connector (601), and
the first electrical connector (501) further comprising at least two first electrical contacts (513a, 513b) housed in the internal connector space (545) and mated with corresponding electrical contacts (613a, 613b) of the second connector (601),
wherein the terminal end surface, in particular the distal end surface (522a, 522b), of each of the first electrical contacts (513a, 513b) at least partially abuts against the respective mating surface (622a, 622b) of a corresponding electrical contact receptacle (615a, 615b), and
wherein the abutment of all electrical contact pairs (513a-613a, 513b-613b) is secured by a tilted arrangement of the first housing (503) relatively to the mating second housing (603) with respect to the mating axis (AX).

13. Lug-free electrical connector assembly according to claim 12, wherein the housing (503) of the first electrical connector (501) is coupled with, in particular screwed on, the second connector (601), wherein the tilting of the first housing (503) relatively to the mating second housing (603) is enabled by gap allowances between a first mechanical coupling device of the first electrical connector (501) and a second mechanical coupling device of the second connector (601), in particular wherein the first mechanical coupling device is a screw thread (535) and the second mechanical coupling device is a nut thread (635).

14. Lug-free electrical connector assembly according to claim 12 or 13, wherein in the tilted arrangement, the mutual facing surfaces (517, 617) of the first (503) and second housings (603) only partially abut.

15. Lug-free electrical connector assembly, in particular for high power applications using currents of 50A and higher, comprising a first electrical connector (1001) mated with a second electrical connector (1101) along a mating axis (x),
the first electrical connector (1001) comprising a first housing (1003) defining an internal connector space (1045) and mated with a mating second housing (1103) of the second connector (1101), and
the first electrical connector (1001) comprising an electrical socket contact (1013) housed in the internal connector space (1045) and mated with a corresponding electrical contact (1113) of the second connector (1101),
wherein a terminal end surface, in particular a distal end surface (1022), of the electrical socket contact (1013) at least partially abuts against a respective mating terminal end surface, in particular a distal end surface (1122), of the corresponding electrical contact (1113),
in particular wherein the shell terminal surfaces (1014) of the first housing (1003) do not abut against the respective shell terminal surfaces (1114) of the second housing (1103).

16. Lug-free electrical connector assembly according to claim 15, wherein
the electrical socket contact (1013) is held, in particular removably form- and/or friction-fitted, in a first contact sleeve (1025), the first contact sleeve (1025) in turn being removably form and/or friction-fitted in the first housing (1003), and/or
the corresponding electrical contact (1113) is held, in particular removably form and/or friction-fitted, in a second contact sleeve (1125), the second contact sleeve (1125) in turn being removably form and/or friction-fitted in the second housing (1103).

17. Lug-free electrical connector assembly according to claim 16, wherein the first electrical connector (1001) further comprises a first safety pin (1031) and/or the second electrical connector (1101) comprises a second safety pin,
each safety pin (1031) being moveable between a safe and an unsafe position, wherein in the unsafe position the safety pins (1031) prevent the mating of the first (1001) and second (1101) electrical connectors, in particular by protruding from the respective housing (1003, 1103) in the direction of the respective mating connector (1001, 1101).
